# EUROPÄISCHE PATENTANMELDUNG

(11) **EP 4 530 771 A1**
(43) Veröffentlichungstag der Anmeldung: **02.04.2025**
(21) Anmeldenummer: 24198985.4
(22) Anmeldetag: 06.09.2024
(51) Int. Cl.: G05B 19/4093

(54) **BEARBEITUNGSMANAGEMENT BEI EINER BEARBEITUNG EINES GESAMTWERKZEUGS AUS EINEM WERKZEUGHALTER UND EINEM WERKZEUG**

(30) Priorität: 12.09.2023 DE 102023124591; 29.09.2023 DE 102023126747; 01.08.2024 DE 102024122026
(71) Anmelder: Franz Haimer Maschinenbau KG, 86568 Hollenbach-Igenhausen (DE)
(72) Erfinder: Haimer, Andreas, 86568 Hollenbach-Igenhausen (DE)
(74) Vertreter: Schwarz, Wolfgang

(57) **Zusammenfassung**

Die Erfindung betrifft ein **Verfahren** zu einem Datenaustausch bei einer Steuerung einer Bearbeitung eines Gesamtwerkzeugs aus einem Werkzeughalter und einem Werkzeug und ein **Bearbeitungsmanagementsystem** sowie eine **Vorrichtung/ein System zur Datenverarbeitung,** ein **Computerprogramm[produkt]** und ein **computerlesbares (Speicher-)medium.**

Das **Verfahren** zu einem Datenaustausch bei einer Steuerung einer Bearbeitung eines Gesamtwerkzeugs aus einem Werkzeughalter und einem Werkzeug in einer integrierten/verknüpften Bearbeitungsumgebung mit zumindest einem Gerät zu einem Montieren des Werkzeugs in den Werkzeughalter und/oder einem Wuchtgerät und/oder einem Voreinstellgerät, sieht vor, dass, insbesondere eine übergeordnete Fertigungsplanung/-steuerung zur Fertigung eines Bauteils, Bearbeitungsdaten zur Bearbeitung des Gesamtwerkzeugs, insbesondere eine Werkzeugliste und/oder Einrichtungsblätter, an ein **Bearbeitungsmanagementsystem** übermittelt. Das **Bearbeitungsmanagementsystem** ermittelt dann unter Verwendung der Bearbeitungsdaten ermittelte Arbeitsanweisungen/-daten an die Geräte der integrierten/verknüpften Bearbeitungsumgebung.

## Beschreibung

Die Erfindung betrifft ein **Verfahren** zu einem Datenaustausch bei einer Steuerung einer Bearbeitung eines Gesamtwerkzeugs aus einem Werkzeughalter und einem Werkzeug in einer integrierten/verknüpften bzw. vernetzten Bearbeitungsumgebung und ein **Bearbeitungsmanagementsystem** sowie eine **Vorrichtung/**ein **System zur Datenverarbeitung,** ein **Computerprogramm[produkt]** und ein **computerlesbares (Speicher-)medium.**

Es ist bekannt im Rahmen automatisierter und/oder digitalisierter Fertigungsprozesses (Industrie 4.0) bei der Fertigung von Bauteilen integrierte bzw. vernetzte Fertigungsumgebungen mit integrierten/verknüpften Geräten, wie Werkzeugmaschinen und anderen Fertigungsgeräten, zu verwenden.

Hierbei kommunizieren die in solchen Fertigungsumgebungen integrierten Geräte - im Rahmen dortiger Steuerung - über - meist definierte - Schnittstellen miteinander -, wobei für - auf den Geräten durchgeführten - Prozesse wichtige Daten, d.h., Bearbeitungsdaten, ausgetauscht bzw. übertragen werden.

Bei einem Fertigungsprozess bei der Bauteilfertigung erfolgt, wie auch bekannt, der Fertigungsprozess der Bauteile mittels von sogenannten Gesamtwerkzeugen, worunter man einen Werkzeughalter, beispielsweise ein Spannfutter, wie ein Schrumpffutter, sowie ein in einem solchen Werkzeughalter eingesetztes bzw. dort gespannt gehaltenes Werkzeug, beispielsweise ein Rotationswerkzeug, wie einen Fräser, versteht.

Erfolgt die Bauteilfertigung - beispielsweise mittels einer Werkzeugmaschine, wie einer CNC (Fräs-)Maschine, - unter Verwendung eines solchen Gesamtwerkzeugs - und kommt es während der Bauteilfertigung zu Verschleiß am Werkzeug, so erfordert dies eine Montage des Gesamtwerkzeugs bzw. einen Austausch eines Werkzeugs bei dem Gesamtwerkzeug.

Hierzu stehen bekannte Geräte, wie insbesondere Montagegeräte (zur Montage von Werkzeugen in Werkzeughalter), beispielsweise Schrumpfgeräte, zur Verfügung, welche so auch Teil von der integrierten bzw. vernetzten (Bauteil-)Fertigungsumgebung sein/werden können.

Ein Automatisierungsgrad von solchen Fertigungsumgebungen, wie auch eine Qualität von in solchen Fertigungsumgebungen gefertigten Bauteilen, hängt maßgeblich davon ab, wie gut die Prozesse in einer solchen Fertigungsumgebung koordiniert, überwacht und gesteuert werden können, insbesondere auch welche Daten - sowie wie gut und zuverlässig Daten an den einzelnen Geräten - zur Verfügung stehen.

Es ist Aufgabe der Erfindung, es zu ermöglichen, einen Automatisierungsgrad bei einer Bauteilfertigung zu erhöhen, insbesondere dies auch bei hoher Effizienz und Effektivität der Fertigung. Auch ist es Aufgabe der Erfindung, es zu ermöglichen, dass eine Bauteilfertigung mit hoher Genauigkeit, aber auch Schnelligkeit durchgeführt werden kann.

Diese Aufgabe wird gelöst durch ein **Verfahren** zu einem Datenaustausch bei einer Steuerung einer Bearbeitung eines Gesamtwerkzeugs aus einem Werkzeughalter und einem Werkzeug und einem **Bearbeitungsmanagementsystem** sowie eine **Vorrichtung/System zur Datenverarbeitung,** ein **Computerpro-gramm[produkt]** und ein **computerlesbares (Speicher-)medium** mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf das **Verfahren** wie auch auf das **System,** die **Vorrichtung/System,** das **Computerprogramm[produkt]** und das **computerlesbares (Speicher-)medium.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das **Verfahren** zu einem Datenaustausch bei einer Steuerung einer Bearbeitung eines Gesamtwerkzeugs aus einem Werkzeughalter und einem Werkzeug in einer integrierten/verknüpften bzw. vernetzten Bearbeitungsumgebung mit zumindest einem Gerät zu einem Montieren des Werkzeugs in den Werkzeughalter und/oder einem Wuchtgerät und/oder einem Voreinstellgerät, sieht vor, dass, insbesondere eine übergeordnete Fertigungsplanung/- steuerung zur Fertigung eines Bauteils, Bearbeitungsdaten zur Bearbeitung des Gesamtwerkzeugs, insbesondere eine Werkzeugliste und/oder Einrichtungsblätter, an ein Bearbeitungsmanagementsystem übermittelt.

Das Bearbeitungsmanagementsystem übermittelt dann unter Verwendung der Bearbeitungsdaten ermittelte Arbeitsanweisungen/- daten an die Geräte der integrierten/verknüpften bzw. vernetzten Bearbeitungsumgebung.

Das **Bearbeitungsmanagementsystem** für einen Datenaustausch bei einer Steuerung einer Bearbeitung eines Gesamtwerkzeugs aus einem Werkzeughalter und einem Werkzeug in einer integrierten/verknüpften bzw. vernetzten Bearbeitungsumgebung mit zumindest einem Gerät zu einem Montieren des Werkzeugs in den Werkzeughalter und/oder einem Wuchtgerät und/oder einem Voreinstellgerät ist derart eingerichtet, dass unter Verwendung von, insbesondere von einer übergeordneten Fertigungsplanung/-steuerung zur Fertigung eines Bauteils übermittelte, Bearbeitungsdaten zur Bearbeitung des Gesamtwerkzeugs, insbesondere eine Werkzeugliste und/oder Einrichtungsblätter, Arbeitsanweisungen/-daten ermittelbar und diese Arbeitsanweisungen/-daten an die Geräte der integrierten/verknüpften bzw. vernetzten Bearbeitungsumgebung übermittelbar sind.

Das **Verfahren** und das **Bearbeitungsmanagementsystem** sind insbesondere realisiert im Rahmen eines, insbesondere automatisierten und/oder digitalisierten, Bearbeitungsprozesses bei dem Gesamtwerkzeug - sowie Fertigungsprozesses für die Fertigung eines Bauteils unter Verwendung eines bzw. des Gesamtwerkzeugs - mit gegebenenfalls weiteren Maschinen und Automatisierungskomponenten, wie beispielsweise Werkzeugmaschinen, einer bzw. in einer integrierten bzw. vernetzten Bearbeitungsumgebung bzw. Fertigungsumgebung.

Anstelle von Fertigungsprozessen der Fertigungsumgebung können auch Prozesse anderer (Prozess-)Umgebungen, wie beispielsweise einer Gesamtwerkzeugbestandsverwaltung, hier beispielsweise mit (digitalisierten) Kanban Prozessen (, welcher kontinuierlich einen Pool der Gesamt-/Werkzeuge auf einem bestimmten Level hält), vorhanden sein, welche mit dem **Verfahren** und das **Bearbeitungsmanagementsystem** kommunizieren, insbesondere im Rahmen von Push- und/oder Pull-Meldungen, die mit dem **Bearbeitungsmanagementsystem** ausgetauscht werden. Anders ausgedrückt, hier kommen (bzw. stammen und/oder ggfl. gehen) Bearbeitungsdaten aus solchen anderen (Prozess-)Umgebungen (ggfl. im Rahmen von "Push" oder "Pull") - oder - noch kürzer ausgedrückt, anstelle der Fertigungsumgebung treten andere Umgebungen.

"Integriert"/"vernetzt" meint hierbei insbesondere, dass Informationen, Daten u.Ä. zwischen "integrierten"/"vernetzten" Einheiten ausgetauscht werden können. Im Sinne einer, wie hier auch gemeinten, digitalen Integration/Vernetzung können so auch insbesondere digitale Daten zwischen den Einheiten ausgetauscht werden. Dieses erfolgt in der Regel über (standardisierte, definierte) Schnittstellen (bei den Geräten).

Vereinfacht und anschaulich ausgedrückt, die (integrierte bzw. vernetzte) Fertigungsumgebung umfasst den gesamten Prozess der Bauteilfertigung - und kann so auch - durch einer/die übergeordnete Fertigungsplanung/-steuerung zur Fertigung eines Bauteils (in dieser Fertigungsumgebung) (- entsprechend auch andere (Prozess-)Umgebungen durch dortige übergeordnete Einheiten) - die Bearbeitungsdaten (zur Bearbeitung des Gesamtwerkzeugs für die Fertigung des Bauteils - oder für andere Prozesse) zur Verfügung stellen; die integrierte/verknüpfte Bearbeitungsumgebung umfasst die Erstellung des Gesamtwerkzeugs - und ist, insbesondere funktionell, in die Fertigungsumgebung oder andere Umgebungen integriert - und kann so dann dort (mittels des **Bearbeitungsmanagementsystems)** unter Verwendung der Bearbeitungsdaten Arbeitsanweisungen/-daten generieren/erstellen und diese an die Geräte der integrierten/verknüpften Bearbeitungsumgebung übermitteln.

Auch kann die "übergeordnete" Umgebung, wie erwähnt, eine andere Umgebung sein, beispielsweise eine Gesamtwerkzeugbestandverwaltung, welche die Bearbeitungsdaten zur Verfügung stellt. Anders ausgedrückt, die Bearbeitungsdaten können so auch - beispielsweise - aus einem Kanban Prozess, kommen, welcher beispielsweise kontinuierlich einen Pool der Gesamt-/Werkzeuge auf einem bestimmten Level hält.

Ferner können die Bearbeitungsdaten in Form von Push-und/oder Pull-Meldungen - auch bidirektional - übermittelt werden; insbesondere können so die Bearbeitungsdaten digital vorliegen, beispielsweise digitale Werkzeugliste und/oder Einrichtungsblätter.

Insbesondere kann es so auch zweckmäßig sein, wenn das **Bearbeitungsmanagementsystem** die Geräte der Bearbeitungsumgebung, insbesondere unter Verwendung der Arbeitsanweisungen/-daten überwacht bzw. steuert.

Vereinfacht und anschaulich ausgedrückt, das **Bearbeitungsmanagementsystem** ist die Instanz, welche die Bearbeitungsumgebung bzw. die Geräte der Bearbeitungsumgebung überwacht und/oder steuert. Das **Bearbeitungsmanagementsystem** kann so auch ein zentrales Management der Bearbeitungsumgebung bzw. eine zentrale Vernetzung der Bearbeitungsumgebung realisieren.

Eine Vollautomatisierung in der Bearbeitungsumgebung wird dadurch realisierbar.

Eine solche Überwachung ist insbesondere dann auch realisierbar, wenn das **Bearbeitungsmanagementsystem** eingerichtet ist, um Daten, insbesondere die Arbeitsanweisungen/-daten und/oder Daten, die von den Geräten generiert werden, auszuwerten.

Auch können durch das **Bearbeitungsmanagementsystem** Daten, wie insbesondere die Arbeitsanweisungen/-daten sowie auch andere Daten, bidirektional mit der Bearbeitungsumgebung bzw. in der Bearbeitungsumgebung, insbesondere dortig integrierter bzw. vernetzter Geräte, ausgetauscht werden. Dies ermöglicht auch, dass die Bearbeitungsumgebung bzw. die Geräte der Bearbeitungsumgebung z.B. Anfragen u.Ä. an das **Bearbeitungsmanagementsystem** stellen kann bzw. können.

Vereinfacht und anschaulich ausgedrückt - die Geräte der Bearbeitungsumgebung können Rückmeldung, beispielsweise über deren Zustände und/oder Missstände, an das **Bearbeitungsmanagementsystem** geben.

Die Einbindung des **Bearbeitungsmanagementsystems** (dann weiter) "nach oben" in die Fertigungsumgebung, ermöglicht so die durchgängige Vollautomatisierung einer Bauteilfertigung. Entsprechendes gilt für die Einbindung in andere Umgebungen.

Einbindung kann hier auch meinen, dass im Rahmen einer Push- oder Pull Steuerung Daten, wie insbesondere die Bearbeitungsdaten übertragen werden.

Der Erfindung liegt die Überlegung zugrunde, dass bislang Prozesse in einer (Bauteil-)Fertigungsumgebung nicht völlig - "bis hinunter" in die Bereitstellung/Erstellung von Gesamtwerkzeugen (Bearbeitungsumgebung) - integriert sind/waren, liefen diesbezügliche Prozesse (zur Erstellung eines Gesamtwerkzeugs) in einer "eigenen/separaten" Umgebung, der Bearbeitungsumgebung, ab. Auch auf dieser Ebene, d.h. in der Bearbeitungsumgebung, war eine - eine Vollautomatisierung ermöglichende - Integration der Komponenten nicht realisiert.

Ein durchgängiger vollautomatisierter Prozess bei der Bauteilfertigung war hier so (in der Bearbeitungsumgebung sowie an dieser Schnittstelle "Bearbeitungsumgebung/Fertigungsumgebung" (d.h., "Bauteilfertigung/Gesamtwerkzeugerstellung")) nicht durchgängig - und der Automatisierungsgrad einer "Alles umfassenden, d.h., alle Prozesse umfassenden" Bauteilfertigung war nicht gegeben. Die Erfindung setzt dann diese Erkenntnis um - vereinfacht und anschaulich ausgedrückt - in eine integrierte Bearbeitungsumgebung (für die Erstellung eines Gesamtwerkzeugs), welche einerseits selbst Geräte der Bearbeitungsumgebung (zur Erstellung des Gesamtwerkzeugs) integriert. Andererseits eröffnet die Erfindung so dann auch die Möglichkeit, dass die (integrierte) Bearbeitungsumgebung auch selbst weiter integrierbar ist in die Gesamtumgebung der Bauteilfertigung, d.h., der Fertigungsumgebung.

Waren darüber hinaus durchgängige, eineindeutige Zuweisungen/Kennzeichnungen von Gesamtwerkzeugen bzw. Werkzeughaltern und ihren Werkzeugen in der Bearbeitungsumgebung, wie auch in der Fertigungs- und Bearbeitungsumgebung - insbesondere wegen der nicht durchgängigen Prozesse - schwer bis gar nicht realisierbar bzw. nicht durchhaltbar, so eröffnet die Erfindung jetzt auch eine eineindeutigen Kennzeichnung/Zuweisung ( vgl. später zur "UniqueID") nicht zuletzt in der Bearbeitungsumgebung, wie dann aber auch in der gesamten Fertigungsumgebung.

Auch dadurch wird es möglich, dass Prozesse in der (Fertigungs-/Bearbeitungs-)Umgebung (bis auf unterste Ebenen hinunter, z.B. einem Montieren, beispielsweise einem Schrumpfen, einem Wuchten oder einem Voreinstellen - eines spezifischen Gesamtwerkzeugs) auch jederorts und jederzeit vollständig überwachbar und steuerbar werden - und so eine Vollautomatisierung - in der Bearbeitungsumgebung , wie auch in einer (Gesamt-)Fertigungsumgebung realisierbar ist.

Anders ausgedrückt, die Vergabe einer eineindeutigen Kennzeichnung ("UniqueID") für/an ein spezifisches Gesamtwerkzeug/Werkzeug/Werkzeughalter (in der Bearbeitungsumgebung) ("Werkzeuginstanz") kann wesentlich sein für eine (individuelle) Überwachung, Nachverfolgung, Protokollierung eines Gesamtwerkzeugs in/bei Prozessen in der Bearbeitungsumgebung (, wie dann auch in der Fertigungsumgebung). Dies wiederum ist wesentlich für eine Vollautomatisierung.

Wird die eineindeutige Kennzeichnung ("UniqueID") auf einen digitalen Zwilling eines Gesamtwerkzeugs/Werkzeugs/Werkzeughalters vergeben, kann so auch ein Typ bzw. Typkennzeichnung spezifisch - für ein spezifisches Gesamtwerkzeug/Werkzeug/Werkzeughalter - individualisiert bzw. auf dieses heruntergebrochen werden, so können eine Vielzahl von "Schwesterwerkzeugen" auf Basis des (digitalen) Einrichtungsblattes (bzw. digitalen Zwillings) mit eineindeutiger Kennzeichnung ("UniqueID") samt spezifischen Werkzeug und Geometriedaten individuell erstellt werden.

Solche eineindeutige Kennzeichnung kann auf einem spezifischen Gesamtwerkzeug/Werkzeug/Werkzeughalter angebracht sein, insbesondere durch Laserung, - und kann so dort jederzeit und jederorts gelesen werden.

Beispielsweise kann so dann jeder Montagevorgang/Schrumpfvorgang bei einem Gesamtwerkzeug - mit einer solchen, zugewiesenen eineindeutigen Kennzeichnung - (für dieses Gesamtwerkzeug) "zu dieser" eineindeutigen Kennzeichnung protokolliert und gezählt werden. Über einen Reporting-Mechanismus kann dann beispielsweise die Zahl der Montagezyklen/Schrumpfzyklen abgefragt werden - und bei Erreichen fester Grenzen Warnungen anzeigen, um den Werkzeughalter des Gesamtwerkzeugs - vor dem Erreichen einer Altersgrenze - austauschen zu können. In gleicher Weise kann der Zustand eines Werkzeuges protokolliert werden, wenn es beispielsweise nach Abarbeitung eines Produktionsauftrages noch über eine Reststandzeit verfügt.

Auch kann mittels einer solchen eineindeutigen Kennzeichnung ("UniquID") bei einem Gesamtwerkzeug vor dessen unsachgemäßer Handhabung und/oder einer falschen Prozessbehandlung bei diesem Gesamtwerkzeug (insbesondere in der Bearbeitungsumgebung) gewarnt werden. So kann beispielsweise, wird die eineindeutige Kennzeichnung ("UniquID") bei einem Gesamtwerkzeug bzw. Werkzeughalter gelesen bzw. gescannt - und dieses so (eineindeutig) - hier beispielsweise als ein nicht zu schrumpfender Werkzeughalter, wie ein Hydrodehnspannfutter oder eine Spannzangenaufnahme, erkannt, eine Warnung ausgegeben werden, welche vor dem Schrumpfen des Gesamtwerkzeugs bzw. des Werkzeughalters warnt.

Darüber hinaus können dieser eineindeutigen Kennzeichnung bzw. mit der eineindeutigen Kennzeichnung gekennzeichneten Gesamtwerkzeugen/Werkzeugen/Werkzeughaltern Kennwerte zugeordnet werden, mit Hilfe derer bei Montieren des Gesamtwerkzeugs/Einschrumpfen bestimmte Maße eingehalten werden können.

Sind so auch alle Komponenten eines Gesamtwerkzeugs, beispielsweise Werkzeughalter, Werkzeugverlängerung und eigentliches Werkzeug (beispielsweise Fräser) bei einem Gesamtwerkzeug, mit der eineindeutigen Kennzeichnung bzw. der Unique ID bezeichnet, so kann das Bearbeitungsmanagementsystem darüber eine Zusammengehörigkeit dieser Komponenten zu dem Gesamtwerkzeug herstellen/dokumentieren - und so eine Zusammenstellung, einen Zusammenbau, und Ähnliches (, insbesondere einem Benutzer) an die Hand geben.

Die **Vorrichtung/**das **System,** das **Computerprogramm[produkt]** und das **computerlesbares (Speicher-)medium** sind eingerichtet, um das erfindungsgemäße **Verfahren/die** Schritte des erfindungsgemäßen **Verfahrens** sowie das **Bearbeitungsmanagement** (und auch deren Weiterbildungen und Ausgestaltungen) auszuführen.

Verschiedene Ausgestaltungen sind beispielhaft bzw. vorteilhaft. So kann das Werkzeug ein Drehwerkzeug oder insbesondere ein Rotationswerkzeug, wie beispielsweise ein Fräswerkzeug (kurz Fräser), ein Bohrer o.Ä., sein. Der Werkzeughalter kann ein Spannfutter, wie ein Schrumpffutter/-aufnahme oder auch eine Spannzangenaufnahme, ein Hydrodehnspannfutter, eine Weldon-Aufnahme, eine Messerkopfaufnahme oder ein Wendeplattenhalter, sein. Das Gerät zum Montieren des Werkzeugs in den Werkzeughalter, kurz Montagegerät, kann so insbesondere ein Schrumpfgerät - oder ein anderes entsprechendes (Montage-)Gerät (für beispielshaft genannte andere Werkzeugfutter, also z.B. eine Montagestation mit einer Vorrichtung zur Aufnahme des Werkzeughalters samt digitaler Anzeige und Rückkopplung zum Bearbeitungsmanagementsystem und/oder zu einer Längenmesseinrichtung) sein.

Auch können in der integrierten/verknüpften Bearbeitungsumgebung - neben den genannten Geräten - auch weitere Geräte, Vorrichtungen, und/oder Anlagen, wie beispielsweise eine Reinigungsstation oder eine Konservierungsstation, wie auch Managementlösungen/Managementsysteme, wie beispielsweise insbesondere auch Werkzeug-/Toolmanagementlösungen, Werkzeugausgabesysteme/Werkzeugrückgabesysteme, Bestandsverwaltungssysteme, Datenverwaltungssysteme, insbesondere auch für Werkzeugdaten, Werkzeughalterdaten, Fertigungsdaten, Bearbeitungsdaten, z.B. Schrumpf- und/oder Wuchtparameter, Vorhaltemaß (d.h., ein beim Schrumpfen auf Länge zu berücksichtigender Wert, um nach dem Abkühlen das gewünschte Sollmaß genauer zu erreichen), Gewicht, A-Maß des Futters u.Ä. (allesamt vereinfacht auch kurz nur als "Geräte" bezeichnet), integriert/verknüpft sein.

Ferner ist es insbesondere zweckmäßig, wenn die (Arbeits-/Bearbeitungs-)Daten, die Arbeitsanweisungen und sonstige Informationen bzw. Daten digital sind. Insbesondere sind auch so die Werkzeuglisten und/oder die Einrichtungsblätter digital.

Insbesondere ist es zweckmäßig und vorteilhaft das **Bearbeitungsmanagement** mit einer zentralen Datenbank zu vernetzen/verknüpften bzw. kommunizieren zu lassen - oder eine solche in das **Bearbeitungsmanagementsystem** zu integrieren.

Auch ist es zweckmäßig, wenn, insbesondere das **Bearbeitungsmanagementsystem,** eingerichtet ist, um Daten, insbesondere die Arbeitsanweisungen/-daten und/oder Daten, die von den Geräten generiert werden, auszuwerten.

Auch können in der Bearbeitungsumgebung, insbesondere bei den Geräten der Bearbeitungsumgebung, einzelne Datenbanken realisiert sein, welche insbesondere synchronisiert werden können - und sich so iterativ ergänzen.

Insbesondere Werkzeugdaten, Werkzeughalterdaten, Bearbeitungsdaten, wie insbesondere Schrumpf- und Wucht- und/oder Voreinstellparameter, können dort gespeichert bzw. dort speicherbar sein. Diese können durch Benutzerdaten und Zeitstempel - für Werkzeuge/Werkzeughalter/Gesamtwerkzeuge - "angereichert" werden, damit Fehlbedienungen durch eine ganzheitliche Übersicht der Prozesse und eventueller Fehlmontagen einfach identifizierbar sind. Über diese Daten kann so auch ein komplettes Werkzeugmanagement/-verwaltung zur Verfügung gestellt werden.

Dabei kann es ferner zweckmäßig sein, wenn gespeicherte Daten, insbesondere gespeicherte Werkzeugdaten - und darüber Werkzeuge, gruppierbar sind, beispielsweise mittels zuweisbarer "Etiketten", "Stempel" - oder anderweitiger, insbesondere digitaler Markierungen, bzw. TAGs.

Beispielsweise kann es möglich sein, dass - auch über mehrere Ebenen - Werkzeuge, beispielsweise auch in Listen, gruppiert werden. Gruppierungskategorien können beispielsweise spezielle Maschinen, spezielle Standorte, spezielle Bearbeitungen, spezielle Projekte u.Ä. sein.

Auch können jegliche sonstige Dokumentation, wie beispielsweise auch (bzw. in Form von) Fotos, Zeichnungen, Bilder und Ähnliches, zu Werkzeuge/Werkzeughalter/Gesamtwerkzeuge, insbesondere in der Datenbank, gespeichert werden.

Auch eine Benutzerverwaltung bzw. -rückmeldung kann bei dem Bearbeitungsmanagementsystem bzw. über dortige Daten eingerichtet sein. Bei Geräten angemeldete Benutzer bzw. deren Anmeldung/Anmeldedaten/Anmeldeinformationen können gespeichert werden, um so in Historien dokumentiert (und auswertbar) zu sein.

Diesbezüglich kann es weiter auch von Nutzen sein, wenn das Bearbeitungsmanagementsystem eine Identifizierung und/oder Anmeldung von Benutzern (im System und/oder an Geräten) - beispielsweise über Codes, auslesbare Datenträger, wie gegebenenfalls RFID-Karten/-Tags, oder Ähnlichem und/oder biometrischen Daten - erlaubt.

Weiter kann hier dann auch zweckmäßig sein, wenn das Bearbeitungsmanagementsystem ein Lesen, insbesondere auch ein Beschreiben von Datenträgern (, welche insbesondere an den Geräten in der Bearbeitungsumgebung verwendet werden), erlaubt. Beispielsweise ist es so von Nutzen, wenn Datenträger an Werkzeugen, wie beispielsweise Balluffchips (an Werkzeughaltern), - durch bzw. bei dem Bearbeitungsmanagementsystem - beschreibbar/lesbar sind. Dabei ist es hier insbesondere auch von Nutzen, wenn diese kompatibel zu den Geräten (der Bearbeitungsumgebung) sind.

Alles Derartiges kann beispielsweise dann ausgewertet werden, beispielsweise durch AI und/oder Bildverarbeitung und/oder "Machine Learning", - um beispielsweise Schneiden/-geometrien zu analysieren - beispielsweise hinsichtlich deren Verschleiß.

Werden Historien so dokumentiert und/oder ausgewertet, so können dann Veränderungen und/oder Vergleiche (über Zustände bei Werkzeuge/Werkzeughalter/Gesamtwerkzeuge) ermittelt und/oder gezogen werden, - und gegebenenfalls hierüber auch Voraussagen (zu Werkzeuge/Werkzeughalter/Gesamtwerkzeuge, beispielsweise Verschleißentwicklungen) getroffen werden ("predictive analysis").

Weichen solche Auswertungen und/oder Voraussagen von Vorgaben ab, beispielsweise ein analysierter bzw. festgestellter Schneidebruch und/oder eine Abweichung einer Soll/Ist Standzeit vom tatsächlichen Bild, und so gegebenenfalls Fehler zu erwarten sin, können diesbezügliche Warnungen ausgegeben werden.

Weitere Möglichkeiten zur Auswertung der gewonnenen Daten, evtl. mit KI:
- Verfolgen des Verschleißverhaltens mit Bildern aus dem Voreinstellgerät oder mit separat angefertigten Bildern oder Messungen
- Zuordnung des Verschleißverhaltens / -bildes zur durchgeführten Bearbeitung
- Erkennung von ungewöhnlichen Verschleißbildern
- Rückschlüsse von Verschleißbild auf mögliche Fehler in der Bearbeitung, z. B. ungünstige Schnittdaten oder Probleme in Werkzeug- oder Werkstückspannung.
- Daraus Vorschlag von verbesserten Schnittdaten bzw. Korrektur von anderen Fehlern
- Rückschlüsse auf Eigenschaften der Werkzeugmaschine, z. B. Steifigkeit, Schwingungsanfälligkeit

Solche KI ist auch Gegenstand der am 01.08.2024 von der Anmelderin eingereichten DE 10 2024 122 026.0, welche so zum Gegenstand der vorliegenden Anmeldung gemacht wird ("incorporate by reference"). Diesbezügliche Ausführungen aus der DE 10 2024 122 026.0 werden auch nachfolgend explizit als Gegenstand in vorliegender Anmeldung beschrieben (vgl. Überschrift ""Incorporate by reference" - DE 10 2024 122 026.0 - Verfahren und Vorrichtung zum autonomen Vermessen eines Werkzeugs oder eines Komplettwerkzeugs" und Text). Merkmale der DE 10 2024 122 026.0 sind so auch Gegenstand der vorliegenden Anmeldung und können auch in beliebiger Kombination mit sonstigen Merkmalen der vorliegenden Anmeldung kombiniert werden, was weitere anmeldungsgemäße Gegenstände ergibt.

Ferner ist es auch zweckmäßig, wenn das Bearbeitungsmanagementsystem bzw. deren "Datenhaltung" einen Datenimport bzw. - export (Import-/Export-Funktion) erlaubt. Zweckmäßig ist es dabei, wenn ein solcher Datenimport/-export in beliebigen Formaten möglich ist. So können beispielsweise Listen, Kataloge - oder auch beliebige andere Zusammenstellungen von Daten importiert und/oder exportiert werden. Dies erlaubt so Datenaktualisierungen und/oder Datensynchronsierungen im Bearbeitungsmanagementsystem.

Dies - allumfassende Datenhaltung - ermöglichte dem **Bearbeitungsmanagementsystem** insbesondere auch die Möglichkeit aus solchen Daten die Gesamtwerkzeuge (aus Werkzeugen und Werkzeughalter) "zusammenzubauen" - und diese dann auch mit entsprechenden Bearbeitungsparametern zu verknüpfen. Derartiges kann dann wieder Bestandteil von Arbeitsanweisungen/-daten sein -, worüber dann die Geräte in der Bearbeitungsumgebung (zentral) steuerbar sind bzw. werden.

Ferner ist es zweckmäßig, wenn unter Verwendung der Arbeitsanweisungen/-daten die Geräte der integrierten/verknüpften Bearbeitungsumgebung, insbesondere ferngesteuert durch das Bearbeitungsmanagementsystem, überwacht und/oder gesteuert werden. Hier ist es insbesondere dann auch zweckmäßig, wenn Werkzeuge/Werkzeughalter/Gesamtwerkzeuge mit einem eineindeutigen Code, wie einem eineindeutigen Data-matrix-Code, codiert werden. In diesem Code können so dann eineindeutige Kennzeichnungen, wie Nummern, - oder andere (dann eineindeutige) Informationen gespeichert/codiert sein.

Darüber hinaus kann das Bearbeitungsmanagementsystem - insbesondere durch seine Arbeitsanweisungen/-daten - über seine Bearbeitungsumgebung hinaus in die Fertigungsumgebung "einwirken" und/oder dort kommunizieren, insbesondere zu dortigen Fertigungsmaschinen. Dies ermöglichte beispielsweise ein Feedback und/oder eine "connectivity" zur Maschinensteuerungen, inklusive einer 3D Kollisionsüberwachung des physischen Teils von Werkzeug/Werkzeughalter/Gesamtwerkzeug.

Auch kann vorgesehen sein, dass die Arbeitsdaten, insbesondere die für das Montagegerät, insbesondere das Schrumpfgerät, zumindest eine der folgenden Informationen, insbesondere mehrere der folgenden Informationen, insbesondere alle der folgenden Informationen, beinhalten:
- Typ des Werkzeughalters, insbesondere des Schrumpffutters, (gegebenenfalls auch Artikelnummer) und/oder Lagerplatz des Werkzeughalters, insbesondere des Schrumpffutters,
- eindeutige Kennzeichnung, insbesondere Nummer, des Werkzeughalters, insbesondere des Schrumpffutters,
- Typ des Werkzeugs, insbesondere des Fräsers, und/oder Lagerplatz des Werkzeugs, insbesondere des Fräsers,
- eindeutige Kennzeichnung, insbesondere Nummer, des Werkzeugs, insbesondere des Fräsers, insbesondere im Fall, dass das bereits benutzte Werkzeug, insbesondere der Fräser, noch genügend Restlaufzeit hat, und/oder des Werkzeughalters, insbesondere des Schrumpffutter,
- Anzahl von benötigten gleichen Werkzeugen, insbesondere abhängig von einer geplanten Stückzahl eines zu fertigenden Bauteiles und einer Standzeit des Werkzeugs, insbesondere des Fräsers, insbesondere auch unter Berücksichtigung einer Restlaufzeit bei gebrauchten Werkzeugen, insbesondere Fräsern,
- Soll-Länge des Gesamtwerkzeuges mit Toleranzen,
- Vorhaltemaß (gegebenenfalls noch anzupassen),
- Anzahl von Montagezyklen, insbesondere Schrumpfzyklen, des Werkzeughalters, insbesondere des Schrumpffutters.

Die Arbeitsanweisungen, insbesondere die für das Montagegerät, insbesondere das Schrumpfgerät, können zumindest eine der folgenden Informationen, insbesondere mehrere der folgenden Informationen, insbesondere alle der folgenden Informationen, beinhalten:
- Werkzeughalter, insbesondere Schrumpffutter, und/oder Werkzeug, insbesondere Fräser, in einer vorgegebenen Stückzahl aus Lager entnehmen,
- Lesen, insbesondere Scannen, einer eindeutigen Kennzeichnung, insbesondere Data-Matrix-Code und/oder Nummer, am/des Werkzeughalters, insbesondere Schrumpffutters, und/oder am/des Werkzeugs, insbesondere des Fräsers,
- , insbesondere automatische, Auswahl von Schrumpfparameter, insbesondere mit einem Vorhaltemaß,
- Anzeigen von bzw. aller relevanten Schrumpfparameter/- daten,
- Längenanschlag auf eine vorgegebene oder vorgebbare Länge fahren, evtl. automatisch oder manuell mit Benutzerführung am Montagegerät, insbesondere am Schrumpfgerät,
- Anzeige Grobeinstellung, insbesondere mit Farbanzeige, insbesondere rot / grün,
- bei Annäherung an das Sollmaß Feinanzeige, insbesondere mit Farbanzeige, insbesondere mit rot / grün,
- Werkzeughalter, insbesondere Schrumpffutter, erwärmen,
- Werkzeug, insbesondere Fräser, einsetzen,
- Längenanschlag einschwenken,
- Werkzeug, insbesondere Fräser, anheben an Längenanschlag (manuell oder mit Druckfeder),
- Wartezeit, bis Werkzeug, insbesondere Fräser, geklemmt wird,
- Werkzeughalter, insbesondere Schrumpffutter, kühlen,
- Überwachung des Kühlvorganges,
- Ist-Länge kontrollieren mit Längenanschlag,
- Abspeichern der Ist-Länge in Datenbank,
- Kennzeichnung des Gesamtwerkzeugs mit der eindeutigen Nummer des Werkzeughalters, insbesondere des Schrumpffutters.
- , insbesondere als Alternative zum Schrumpfen für mechanische Spannfutter eine automatische, Anzeige von Werkzeughalterparameter, insbesondere zu verwendendes Drehmoment für das insbesondere Spannzangenfutter oder Hydrodehnspannfutter zur fachgerechten Montage sowie dem dazugehörigen Zubehör für Wendeplattenhalter wie Nutensteine, Montagevorrichtungen und dergleichen, sowie abschließende Darstellung des Komplettwerkzeuges zur Bestätigung der fachgerechten Montage, insbesondere samt deren Längentoleranzen.

Dabei kann die Information die Anweisung selbst sein oder kann Bestandteil der Anweisung sein oder es kann die Anweisung aus der Information generiert werden.

Weiterhin kann vorgesehen sein, dass die Arbeitsdaten, insbesondere die für das Voreinstellgerät, zumindest eine der folgenden Informationen, insbesondere mehrere der folgenden Informationen, insbesondere alle der folgenden Informationen, beinhalten:
- eine Geometrieinformation, insbesondere eine Gesamtlänge des Gesamtwerkzeugs und/oder einen Durchmesser des Werkzeugs, insbesondere des Fräsers, und/oder Eckenradius des Werkzeugs, insbesondere des Fräsers
- eine Werkzeugstandzeit, insbesondere in Form von Bauteilen pro Neuwerkzeug oder Standzeit in Minuten / Stunden.

Ferner ist es zweckmäßig, wenn die Arbeitsanweisungen, insbesondere die für das Voreinstellgerät, auch zumindest eine der folgenden Informationen, insbesondere mehrere der folgenden Informationen, insbesondere alle der folgenden Informationen, beinhalten:
- Gesamtwerkzeug in Messspindel einsetzen,
- ggf. Start eines automatischen Messlaufes - oder Start einer manuellen Vermessung, insbesondere von vorgegebenen Größen,
- Einlesen von Ist-Maße in Datenbank und/oder Ist-Maße senden an Bearbeitungsmanagementsystem (bzw. deren Datenbank),
- zusätzlich - senden von Voreinstelldaten auch an Bearbeitungsmaschinen.

Ferner ist es zweckmäßig, wenn die Arbeitsdaten, insbesondere die für das Wuchtgerät, auch zumindest eine der folgenden Informationen, insbesondere mehrere der folgenden Informationen, insbesondere alle der folgenden Informationen, beinhalten:
- Wuchttoleranz aus Datenbank,
- weitere Parameter wie Gesamtlänge und Gesamtgewicht aus Datenbank
- Messmethode (z. B. einfach / Umschlag bzw. (automatisches) Umschlagwuchten / einfach mit Spindelkorrektur),
- Auswuchtmethode (z. B. Unwuchtausgleich durch Materialabnahme oder Materialzusatz oder durch Verstellen von Massen) sowie insbesondere entsprechende Wuchtebenen (Höhe, Durchmesser, ...), wo Masse hinzugefügt oder abgetragen werden muss.

Darüber hinaus sieht eine bevorzugte Ausgestaltung auch vor, dass die Arbeitsanweisungen, insbesondere die für das Wuchtgerät, auch zumindest eine der folgenden Informationen, insbesondere mehrere der folgenden Informationen, insbesondere alle der folgenden Informationen, beinhalten:
- Gesamtwerkzeug in Wuchtspindel einspannen,
- Messlauf nach vorgegebener Messmethode (z. B. einfach / Umschlag / einfach mit Spindelkorrektur),
- Unwuchtausgleich nach vorgegebener Methode,
- Überprüfen der Wuchtgenauigkeit (Prüflauf), Ist-Unwucht einlesen in Datenbank,
- Ergebnis senden an Bearbeitungsmanagementsystem (bzw. deren Datenbank),
- gegebenenfalls Vorgang wiederholen, bis Ergebnis in Ordnung (im Bearbeitungsmanagementsystem ist somit der Verlauf des Wuchtens nachvollziehbar).

Zweckmäßig ist es auch, wenn das **Bearbeitungsmanagementsystem**
- einen Status, insbesondere einen Online Status, zumindest eines Geräts, insbesondere sämtlicher Geräte, überwacht und/oder
- Prozesse zumindest eines Geräts, insbesondere sämtlicher Geräte, dokumentiert, insbesondere auch Eingriffe, insbesondere manuelle Eingriffe, in Prozesse dokumentiert
- und/oder eine Einhaltung von vorgegebenen bzw. vorgebbaren Toleranzen bei den Prozessen von zumindest einem Gerät, insbesondere von sämtlichen Geräte, überwacht und/oder
- Veränderungen, insbesondere von einem Gerätestatus, von Arbeitsanweisungen/-Daten, Werten, Toleranzen und/oder sonstigen Informationen überwacht und/oder dokumentiert und/oder
- Prozesswiederholungen zählt und/oder dokumentiert, insbesondere unter Bezugnahme auf die eindeutige Kennzeichnung des Werkzeughalters und/oder des Werkzeugs und/oder
- Arbeitsanweisungen/-daten aktualisiert und/oder
- Arbeitsanweisungen/-daten im Falle unerwünschter Zustände, insbesondere Fehlerzustände und/oder fehlerhafter bzw. fehlerhaft durchgeführter Prozesse, erzeugt und/oder
- aus den Arbeitsanweisungen eine Jobliste generiert und insbesondere die Jobliste den Geräten der Bearbeitungsumgebung zur Verfügung stellt bzw. übermittelt (dieses kann vom Bearbeitungsmanagementsystem vorab an eine Maschine (als "Job") gesendet werden, oder zum Zeitpunkt der Durchführung von der Maschine beim Bearbeitungsmanagementsystem angefordert werden) und/oder
- Bearbeitungsprozesse, insbesondere solche die auf den Geräten der Bearbeitungsumgebung, insbesondere bei der Erstellung des Gesamtwerkzeugs, durchgeführt werden, zählt und dokumentiert und/oder
- bidirektional in der bzw. mit der Bearbeitungsumgebung bzw. mit den Geräten der Bearbeitungsumgebung kommuniziert und/oder
- einen Status von in die Umgebungen integrierter Geräte (live) "trackt" (Status: Online/Offline; Status: Rückmeldung des Jobs (Gut/Schlecht)),
- den/die zuletzt durchgeführten Jobs von einer eineindeutigen Kennzeichnung überprüft (Letztes Ergebnis des durchgeführten Jobs wird an der eineindeutigen Kennzeichnung angezeigt - somit kann man sicherstellen, dass alle notwendigen Schritte auch durchgeführt worden sind.),
- lückenlos die Historie der durchgeführten Arbeiten an den Maschinen aufzeichnet und die durchgeführten Arbeiten an den Maschinen dokumentiert.

Entsprechende Einrichtungen dafür - am **Bearbeitungsmanagementsystem** - können vorgesehen sein. Beispielsweise auch Visualisierungsvorrichtungen, mittels welchen Derartiges visualisiert werden kann.

Weiterhin erweist es sich als zweckmäßig, wenn die Arbeitsanweisungen/-daten über eine OPC-UA Schnittstelle, und/oder eine Client Schnittstelle oder eine MQTT Schnittstelle, insbesondere bidirektional, übermittelt werden.

Auch kann vorgesehen sein, dass das **Verfahren** und/oder das **Bearbeitungsmanagement** computerimplementiert, beispielsweise auf einer Steuereinheit/einem Steuerrechner - oder aber auch auf verteilten Systemen/Rechnern, ist.

So ist es zum Beispiel auch möglich, dass das **Bearbeitungsmanagementsystem** zentral - oder insbesondere auf den Geräten der Bearbeitungsumgebung funktioniert. Im dezentralen Fall können Daten dann zwischen den "dezentralen" **Bearbeitungsmanagementsystemen** synchronisiert - und so diese iterativ ergänzt werden.

Weiter vorteilhaft kann das **Bearbeitungsmanagementsystem** Auswertungen über Daten, beispielsweise über eine Anzahl von Bearbeitungsschritten, z.B. eine Anzahl von Montage-/Schrumpfzyklen (pro individueller Kennzeichnung eines Gesamtwerkzeugs/Werkzeugs/Werkzeughalters). Hier eignen sich insbesondere eindeutige Benutzerdaten, wie Zeitstempel und Benutzerkennung.

So können dann insbesondere auch Auswertungen des kompletten Werkzeugvoreinstellraums, inklusive Job Daten mit Soll / Ist Werten, gefahren werden. Darauf aufbauend - kann dann beispielsweise bei Toleranzabweichungen eine Ampelfunktion (ROT/GRÜN) dieses anzeigen. Allgemeiner ausgedrückt, Auswertungen können zu Hinweisen, Benachrichtigungen, Warnungen u.Ä. führen, wie auch diesbezüglich Prozesse auslösen.

Sind beispielsweise die Daten mit den erwähnten Zeitstempeln und/oder Benutzerkennungen/-daten versehen, so kann die Auswertung beispielsweise liefern, wenn (in der (Nacht-)Schicht) "was schief gelaufen" ist - und, insbesondere das **Bearbeitungsmanagementsystem,** kann korrigierend eingreifen. Auch Alarmfunktionen und/oder Benachrichtigungen an einen "Supervisor" denkbar.

Eine bevorzuge Warnmeldung - im Zusammenhang mit einem Schrumpfgerät - kann eine Überhitzungswarnung (Schrumpfalarm) - samt Rückschreiben des Überhitzens bei einer eindeutigen Kennung bzw. eineindeutigen Kennzeichnung (vgl. "Unique ID") des Werkzeughalters bzw. Schrumpffutters sein.

D.h., das Gerät, insbesondere aber das **Bearbeitungsmanagementsystem,** dokumentiert die Überhitzungswarnung - und - im Falle der Überhitzung - dokumentiert es dieses "Event" für die jeweilige Kennung/Kennzeichnung, so dass man eine Warnung bekommt, dass das gekennzeichnete Schrumpffutter überhitzt wurde.

Weiterhin erweist es sich als zweckmäßig, wenn das **Bearbeitungsmanagementsystem** Mittel zur Bedienung, zur Anzeige, zur Visualisierung, einem Einlesen und/oder zu einem Ausdrucken vorsieht. Beispielsweise können so Daten der Bearbeitungsumgebung, insbesondere von den Geräten bzw. Daten über dortige Bearbeitungen/-schritte/-prozesse, beispielsweise ein Vorhaltemaß, eine Auskraglänge eines Werkzeugs in einem Display visualisiert werden.

Ist das **Bearbeitungsmanagementsystem** auch zentrale Überwachungs- und/oder Steuerinstrument für die Bearbeitungsumgebung, erweist es sich insbesondere auch als zweckmäßig, wenn das **Bearbeitungsmanagementsystem** Zustände/Missstände und/oder Bearbeitungsschritte/-prozesse in der Bearbeitungsumgebung bzw. bei den Geräten der Bearbeitungsumgebung ermittelt, validiert protokolliert und/oder überwacht und/oder steuert, Geräte der Bearbeitungsumgebung validiert, einbindet und/oder verknüpft, Bestätigungen (von Zuständen oder Missständen) in die Bearbeitungsumgebung bzw. zu den Geräten der Bearbeitungsumgebung kommuniziert bzw. dort zur Verfügung stellt oder von dort kommuniziert bekommt und Daten mit den Geräten der Bearbeitungsumgebung abgleicht.

Abschließend kann zur Erfindung festgestellt werden, dass sie sich mit allen ihren Aspekten insbesondere durch Einfachheit, Effizienz und Effektivität auszeichnet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigt:

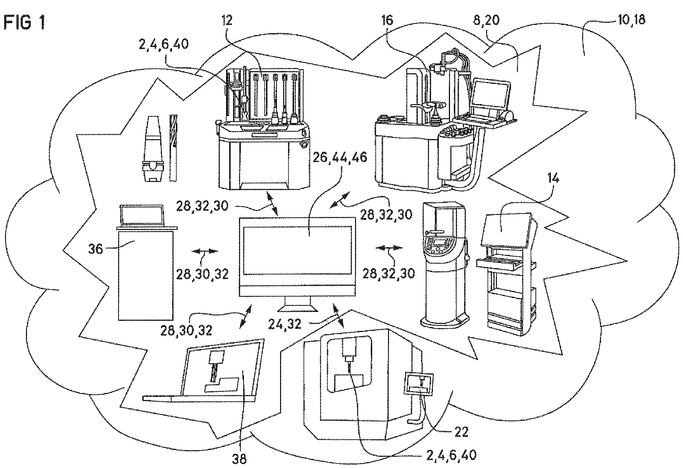

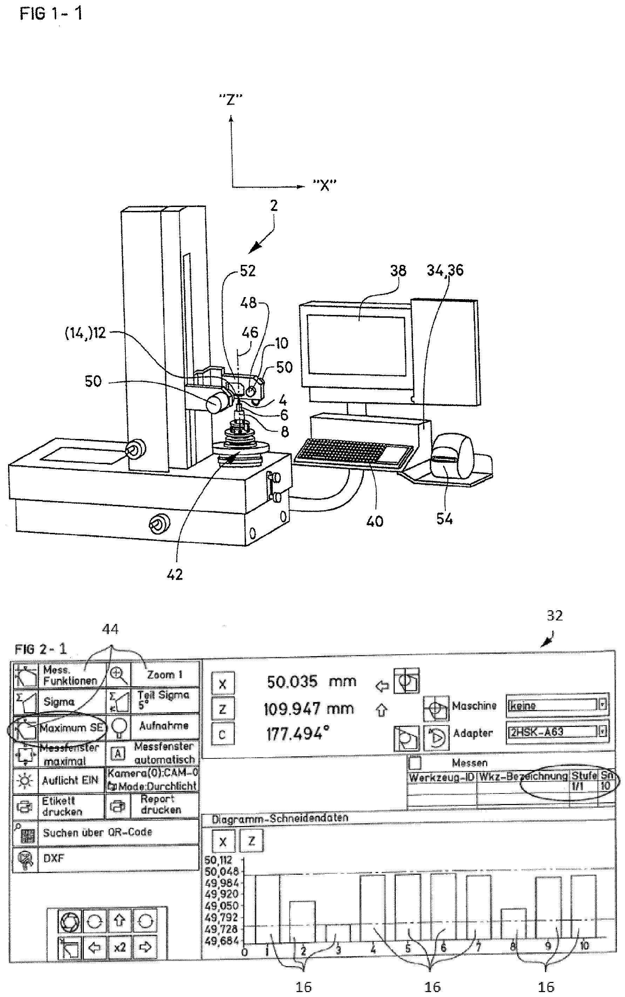

- FIG 1: ein Bearbeitungsmanagement bei einer Bearbeitung eines Gesamtwerkzeugs aus einem Werkzeughalter und einem Werkzeug in einer Fertigungsumgebung einer Bauteilfertigung gemäß einer erfindungsgemäßen Ausführung.

- **Bearbeitungsmanagement bei einer Bearbeitung eines Gesamtwerkzeugs aus einem Werkzeughalter und einem Werkzeug in einer Fertigungsumgebung einer Bauteilfertigung (****FIG 1****)**

FIG 1 zeigt schematisch eine integrierte bzw. vernetzte Fertigungsumgebung 10, in welcher Bauteile im Wesentlichen vollautomatisiert gefertigt werden (können) ((Bauteil-)Fertigungsprozess 18).

Verdeutlicht wird die Bauteilfertigung 18 (in der Fertigungsumgebung 10) mittels einer Werkzeugmaschine 22, nämlich - dargestellt in FIG 1 - einer CNC Fräsmaschine 42, was dann als Fertigungsprozess 18 ein Fräsen von Bauteilen meint.

Bei der Bauteilfertigung 18 bzw. beim Fräsen der Bauteile werden in der Werkzeugmaschine 42 Gesamtwerkzeuge 6 verwendet, bei welchen das Werkzeug 2, in diesem Fall ein Fräswerkzeug 2, kurz Fräser, in einem Werkzeughalter 4, in diesem Fall eine Schrumpfaufnahme/-futter 4, gespannt gehalten wird.

Erfolgt die Bauteilfertigung 18 - hier mittels der CNC Fräsmaschine 42 - unter Verwendung eben eines solchen Gesamtwerkzeugs 6 - und kommt es während der Bauteilfertigung 18 zu Verschleiß am Werkzeug 2 bzw. Fräsers 2, so erfordert dies eine Montage des Gesamtwerkzeugs 6 bzw. einen Austausch des Fräsers 2 im Schrumpffutter 4 (sowie dann einen Gesamtwerkzeugwechsel an der CNC Fräsmaschine 42).

Dies alles kann die Fertigungsumgebung 10 im Wesentlich vollautomatisiert gewährleisten, was auf eine - im Folgenden beschriebene - integrierte, mittels eines Bearbeitungsmanagementsystems 26 überwachte/gesteuerte Bearbeitungsumgebung 8 zurückzuführen ist bzw. durch diese gewährleistet werden kann.

Wie FIG 1 hier so auch - schematisch - verdeutlicht, erfolgt dies in der erwähnten (der Fertigungsumgebung) untergeordneten integrierten und vernetzten Bearbeitungsumgebung 8, in welcher - für einen solchen Werkzeugwechsel notwendige - Geräte (u. A. 12, 14, 16) vernetzt sind - und welche so - den hier gezeichneten - Gesamtwerkzeugerstellungsprozess 20 ausführen.

In hier in FIG 1 gezeigtem Fall - sind bekannte Geräte, nämlich ein Schrumpfgerät 12 (mit Kühlung), ein Wuchtgerät 14 und ein Voreinstellgerät 16 sowie eine Werkzeugverwaltung und Kommissionierung 36 und ein CAD-/CAM-System 38 in der Bearbeitungsumgebung 8 miteinander verbunden bzw. vernetzt/ integriert.

Wie weiter FIG 1 zeigt, sieht die Bearbeitungsumgebung 8 ein zentrales (Bearbeitungs-)Management 26 vor, über welches Prozesse, Abläufe, Kommunikation, u.Ä. (der Geräte in der Bearbeitungsumgebung 8) überwacht und insbesondere gesteuert werden können.

Hier dient - stilisiert in der FIG 1 verdeutlicht - ein sogenanntes **Bearbeitungsmanagementsystem** 26, welcher hier kurz nur als **TRM** 26 bezeichnet werden soll.

Kurz, das TRM 26 überwacht und steuert die Prozesse, die Abläufe und die Kommunikation (der Geräte) in der Bearbeitungsumgebung 8 - und kann so durchgängige Prozesse in der Bearbeitungsumgebung 8 - und darüber hinaus in der Fertigungsumgebung 10 realisieren, wodurch eine Vollautomatisierung (der Prozesse) in den Umgebungen 8, 10 möglich werden.

Dazu sieht das TRM 26 vor, dass unter Verwendung von, insbesondere von einer übergeordneten Fertigungsplanung/-steuerung 22 zur Fertigung 18 eines Bauteils - kurz vereinfacht, aus der Fertigungsumgebung 10, - übermittelte, Bearbeitungsdaten 24 Arbeitsanweisungen/-daten 28, 30 ermittelbar sind bzw. durch das TRM 26 ermittelt werden.

Weiter sieht das TRM 26 dann vor, dass diese Arbeitsanweisungen/-daten 28, 30 an die Geräte der integrierten/verknüpften bzw. vernetzten Bearbeitungsumgebung 8 übermittelbar sind bzw. übermittelt werden (OPC-UA Schnittstelen 32).

Mittels dieser Arbeitsanweisungen 28 und Arbeitsdaten 30 werden dann die Prozesse an den Geräten durchgeführt bzw. sind so durchführbar. Kurz - das TRM 26 kann hierüber die Geräte der Bearbeitungsumgebung 8 überwachen und (den Gesamtwerkzeugerstellungsprozess 20) steuern.

Solche oben genannten Bearbeitungsdaten 24 (der Fertigungsumgebung 10) könnten in diesem Fall beispielsweise - an sich übliche und bekannte - (digitale) Werkzeuglisten 24 und (digitale) Einrichtungsblätter 24 sein. Die Arbeitsanweisungen 28 und Arbeitsdaten 30 des TRM 26 - sowie dessen Funktionalität sollen dann im Folgenden näher beschrieben werden.

Vereinfacht und anschaulich ausgedrückt, das TRM 26 wird zur zentralen Instanz, welche die Bearbeitungsumgebung 8 bzw. die Geräte der Bearbeitungsumgebung 8 überwacht und/oder steuert.

Erfolgt der Daten- und Informationsaustausch innerhalb der Bearbeitungsumgebung 8 über bekannte OPC-UA bidirektionale Schnittstellen 32, so können auch die Geräte der Bearbeitungsumgebung 8 Daten und Informationen, z.B. Anfragen u.Ä., zurück an das TRM 26 senden.

Vereinfacht und anschaulich ausgedrückt - die Geräte der Bearbeitungsumgebung 8 können Rückmeldung, beispielsweise über deren Zustände und/oder Missstände, bei Prozessen an das TRM 26 geben.

Die Einbindung des TRM 26 (dann weiter) "nach oben" in die Fertigungsumgebung 10 ermöglicht so die angesprochene durchgängige Vollautomatisierung einer Bauteilfertigung 18.

Wesentlicher Bestandteil des TRM 26 ist eine zentrale Datenbank 44, welche Werkzeugdaten, Werkzeughalterdaten, (Bearbeitungs-)Daten, wie insbesondere Schrumpf- und Wucht- und/oder Voreinstellparameter, beinhaltet.

Über diese Daten kann so auch ein komplettes Werkzeugmanagement/-verwaltung zur Verfügung gestellt werden.

Damit kann das TRM 26 - vereinfacht und anschaulich gemeint - aus solchen Daten dann die (von der Fertigungsumgebung 10 angeforderten) Gesamtwerkzeuge 6 (aus Werkzeugen 2 und Werkzeughalter 4), d.h. das Gesamtwerkzeug 6 aus Schrumpffutter 4 und Fräser 4 "zusammenbauen" - und diese dann auch mit entsprechenden Bearbeitungsparametern (z.B. Schrumpf-/Wucht-/Voreinstellparameter) verknüpfen.

Derartiges kann dann wieder Bestandteil von Arbeitsanweisungen/-daten 28, 30 sein -, worüber die Geräte in der Bearbeitungsumgebung 8 (zentral) steuerbar sind bzw. werden. D.h., die erwähnten, vom TRM 26 generierten Arbeitsanweisungen 28 und Arbeitsdaten 30 sind wesentlich für eine integrierte, zentrale Steuerung und Überwachung der Bearbeitungsumgebung 8.

So können insbesondere die Arbeitsdaten 30 für das Schrumpfgerät 12 zumindest eine der folgenden Informationen, insbesondere mehrere der folgenden Informationen, insbesondere alle der folgenden Informationen, beinhalten:
- Typ des Werkzeughalters, insbesondere des Schrumpffutters, (gegebenenfalls auch Artikelnummer) und/oder Lagerplatz des Werkzeughalters, insbesondere des Schrumpffutters,
- eindeutige Kennzeichnung, insbesondere Nummer, des Werkzeughalters, insbesondere des Schrumpffutters,
- Typ des Werkzeugs, insbesondere des Fräsers, und/oder Lagerplatz des Werkzeugs, insbesondere des Fräsers,
- eindeutige Kennzeichnung, insbesondere Nummer, des Werkzeugs, insbesondere des Fräsers, insbesondere im Fall, dass das bereits benutzte Werkzeug, insbesondere der Fräser, noch genügend Restlaufzeit hat, und/oder des Werkzeughalters, insbesondere des Schrumpffutter,
- Anzahl von benötigten gleichen Werkzeugen, insbesondere abhängig von einer geplanten Stückzahl eines zu fertigenden Bauteiles und einer Standzeit des Werkzeugs, insbesondere des Fräsers, insbesondere auch unter Berücksichtigung einer Restlaufzeit bei gebrauchten Werkzeugen, insbesondere Fräsern,
- Soll-Länge des Gesamtwerkzeuges mit Toleranzen,
- Vorhaltemaß (gegebenenfalls noch anzupassen),
- Anzahl von Montagezyklen, insbesondere Schrumpfzyklen, des Werkzeughalters, insbesondere des Schrumpffutters.

Die Arbeitsanweisungen 28 für das Schrumpfgerät 12 können zumindest eine der folgenden Informationen, insbesondere mehrere der folgenden Informationen, insbesondere alle der folgenden Informationen, beinhalten:
- Werkzeughalter, insbesondere Schrumpffutter, und/oder Werkzeug, insbesondere Fräser, in einer vorgegebenen Stückzahl aus Lager entnehmen,
- Lesen, insbesondere Scannen, einer eindeutigen Kennzeichnung, insbesondere Data-Matrix-Code und/oder Nummer, am/des Werkzeughalters, insbesondere Schrumpffutters, und/oder am/des Werkzeugs, insbesondere des Fräsers,
- , insbesondere automatische, Auswahl von Schrumpfparameter, insbesondere mit einem Vorhaltemaß,
- Anzeigen von bzw. aller relevanten Schrumpfparameter/- daten,
- Längenanschlag auf eine vorgegebene oder vorgebbare Länge fahren, evtl. automatisch oder manuell mit Benutzerführung am Montagegerät, insbesondere am Schrumpfgerät,
- Anzeige Grobeinstellung, insbesondere mit Farbanzeige, insbesondere rot / grün,
- bei Annäherung an das Sollmaß Feinanzeige, insbesondere mit Farbanzeige, insbesondere mit rot / grün,
- Werkzeughalter, insbesondere Schrumpffutter, erwärmen,
- Werkzeug, insbesondere Fräser, einsetzen,
- Längenanschlag einschwenken,
- Werkzeug, insbesondere Fräser, anheben an Längenanschlag (manuell oder mit Druckfeder),
- Wartezeit, bis Werkzeug, insbesondere Fräser, geklemmt wird,
- Werkzeughalter, insbesondere Schrumpffutter, kühlen,
- Überwachung des Kühlvorganges,
- Ist-Länge kontrollieren mit Längenanschlag,
- Abspeichern der Ist-Länge in Datenbank,
- Kennzeichnung des Gesamtwerkzeugs mit der eindeutigen Nummer des Werkzeughalters, insbesondere des Schrumpffutters.
- , insbesondere als Alternative zum Schrumpfen für mechanische Spannfutter eine automatische, Anzeige von Werkzeughalterparameter, insbesondere zu verwendendes Drehmoment für das insbesondere Spannzangenfutter oder Hydrodehnspannfutter zur fachgerechten Montage sowie dem dazugehörigen Zubehör für Wendeplattenhalter wie Nutensteine, Montagevorrichtungen und dergleichen, sowie abschließende Darstellung des Komplettwerkzeuges zur Bestätigung der fachgerechten Montage, insbesondere samt deren Längentoleranzen.

Die Arbeitsdaten 30 für das Voreinstellgerät 16 können zumindest eine der folgenden Informationen, insbesondere mehrere der folgenden Informationen, insbesondere alle der folgenden Informationen, beinhalten:
- eine Geometrieinformation, insbesondere eine Gesamtlänge des Gesamtwerkzeugs und/oder einen Durchmesser des Werkzeugs, insbesondere des Fräsers, und/oder Eckenradius des Werkzeugs, insbesondere des Fräsers
- eine Werkzeugstandzeit, insbesondere in Form von Bauteilen pro Neuwerkzeug oder Standzeit in Minuten / Stunden.

Die Arbeitsanweisungen 28 für das Voreinstellgerät 16 können auch zumindest eine der folgenden Informationen, insbesondere mehrere der folgenden Informationen, insbesondere alle der folgenden Informationen, beinhalten:
- Gesamtwerkzeug in Messspindel einsetzen,
- ggf. Start eines automatischen Messlaufes - oder Start einer manuellen Vermessung, insbesondere von vorgegebenen Größen,
- Einlesen von Ist-Maße in Datenbank und/oder Ist-Maße senden an Bearbeitungsmanagementsystem (bzw. deren Datenbank),
- zusätzlich - senden von Voreinstelldaten auch an Bearbeitungsmaschinen.

Die Arbeitsdaten 30 für das Wuchtgerät 14 können zumindest eine der folgenden Informationen, insbesondere mehrere der folgenden Informationen, insbesondere alle der folgenden Informationen, beinhalten:
- Wuchttoleranz aus Datenbank,
- weitere Parameter wie Gesamtlänge und Gesamtgewicht aus Datenbank
- Messmethode (z. B. einfach / Umschlag bzw. (automatisches) Umschlagwuchten / einfach mit Spindelkorrektur),
- Auswuchtmethode (z. B. Unwuchtausgleich durch Materialabnahme oder Materialzusatz oder durch Verstellen von Massen) sowie insbesondere entsprechende Wuchtebenen (Höhe, Durchmesser, ...), wo Masse hinzugefügt oder abgetragen werden muss.

Die Arbeitsanweisungen 28 für das Wuchtgerät 14 können zumindest eine der folgenden Informationen, insbesondere mehrere der folgenden Informationen, insbesondere alle der folgenden Informationen, beinhalten:
- Gesamtwerkzeug in Wuchtspindel einspannen,
- Messlauf nach vorgegebener Messmethode (z. B. einfach / Umschlag / einfach mit Spindelkorrektur),
- Unwuchtausgleich nach vorgegebener Methode,
- Überprüfen der Wuchtgenauigkeit (Prüflauf), Ist-Unwucht einlesen in Datenbank,
- Ergebnis senden an Bearbeitungsmanagementsystem (bzw. deren Datenbank),
- gegebenenfalls Vorgang wiederholen, bis Ergebnis in Ordnung (im Bearbeitungsmanagementsystem ist somit der Verlauf des Wuchtens nachvollziehbar).

Neben den erwähnten Arbeitsanweisungen 28 und Arbeitsdaten 30 spielen auch die Funktionalitäten des TRM 26 eine wesentliche Rolle.

So ist bei dem TRM 26 vorgesehen, dass es
- einen Status, insbesondere einen Online Status, zumindest eines Geräts, insbesondere sämtlicher Geräte, überwacht und/oder
- Prozesse zumindest eines Geräts, insbesondere sämtlicher Geräte, dokumentiert, insbesondere auch Eingriffe, insbesondere manuelle Eingriffe, in Prozesse dokumentiert
- und/oder eine Einhaltung von vorgegebenen bzw. vorgebbaren Toleranzen bei den Prozessen von zumindest einem Gerät, insbesondere von sämtlichen Geräte, überwacht und/oder
- Veränderungen, insbesondere von einem Gerätestatus, von Arbeitsanweisungen/-Daten, Werten, Toleranzen und/oder sonstigen Informationen überwacht und/oder dokumentiert und/oder
- Prozesswiederholungen zählt und/oder dokumentiert, insbesondere unter Bezugnahme auf die eindeutige Kennzeichnung des Werkzeughalters und/oder des Werkzeugs und/oder
- Arbeitsanweisungen/-daten aktualisiert und/oder
- Arbeitsanweisungen/-daten im Falle unerwünschter Zustände, insbesondere Fehlerzustände und/oder fehlerhafter bzw. fehlerhaft durchgeführter Prozesse, erzeugt und/oder
- aus den Arbeitsanweisungen eine Jobliste generiert und insbesondere die Jobliste den Geräten der Bearbeitungsumgebung zur Verfügung stellt bzw. übermittelt (dieses kann vom Bearbeitungsmanagementsystem vorab an eine Maschine (als "Job") gesendet werden, oder zum Zeitpunkt der Durchführung von der Maschine beim Bearbeitungsmanagementsystem angefordert werden) und/oder
- Bearbeitungsprozesse, insbesondere solche die auf den Geräten der Bearbeitungsumgebung, insbesondere bei der Erstellung des Gesamtwerkzeugs, durchgeführt werden, zählt und dokumentiert und/oder
- bidirektional in der bzw. mit der Bearbeitungsumgebung bzw. mit den Geräten der Bearbeitungsumgebung kommuniziert und/oder
- einen Status von in die Umgebungen integrierter Geräte (live) "trackt" (Status: Online/Offline; Status: Rückmeldung des Jobs (Gut/Schlecht)),
- den/die zuletzt durchgeführten Jobs von einer eineindeutigen Kennzeichnung überprüft (Letztes Ergebnis des durchgeführten Jobs wird an der eineindeutigen Kennzeichnung angezeigt - somit kann man sicherstellen, dass alle notwendigen Schritte auch durchgeführt worden sind.),
- lückenlos die Historie der durchgeführten Arbeiten an den Maschinen aufzeichnet und die durchgeführten Arbeiten an den Maschinen dokumentiert.

Weiterhin erweist es sich als zweckmäßig, wenn, wie erwähnt, die Arbeitsanweisungen/-daten 28, 30 über die OPC-UA Schnittstelle (oder alternativ eine Client Schnittstelle oder eine MQTT Schnittstelle) - bidirektional - übermittelbar sind bzw. übermittelt werden. Geräterückmeldungen (von den Geräten an das TRM 26), wie ein Status, andere Zu- oder Missstände bei Geräten, Anzahl von Prozessdurchläufen/Bearbeitungsschritte u.Ä., sind so möglich.

Weiterhin sieht das TRM 26 auch eine Auswerteeinheit 46 vor, mittels welcher Auswertungen über Daten und Informationen, wie beispielsweise die (zurückgemeldete) Anzahl von Bearbeitungsschritten, z.B. eine Anzahl von Montage-/Schrumpfzyklen bei einem spezifischen Gesamtwerkzeugs 6/Werkzeugs 2/Werkzeughalters 4, gefahren und (entsprechende) Protokolle erstellt werden können.

### "UniqueID" 40

Weiter wesentlich bei dem hier vorgestellten Bearbeitungsmanagement 26 ist die Vergabe einer eineindeutigen Kennzeichnung **("UniqueID")** 40 an ein Gesamtwerkzeug 6 - aus zusammengebautem spezifischen Werkzeughalter 4 und spezifischem Werkzeug 2 - hier in Form eines gelaserten eineindeutige Data-Matrix-Codes (GS1 Data Matrix) auf dem Gesamtwerkzeug 6 bzw. dortigem Werkzeughalter 4.

Dieser UniqueID 40 eines Gesamtwerkzeugs 6 können so spezifische Daten und Informationen des Gesamtwerkzeugs 6 zugeordnet werden, wie beispielsweise Maße, Toleranzen, Kennwerte, Prozessparameter (Schrumpf-/Voreinstellparameter) u.Ä., wie auch beispielsweise die Anzahl der Montagezyklen (Schrumpfzyklen).

Über diese Nummer kann so dann das spezifische Gesamtwerkzeug - über alle Umgebungen - Bearbeitungsumgebung 8 und Fertigungsumgebung 10 hinweg - "verfolgt", überwacht und - in Prozessen - gesteuert werden.

Nur dies ermöglicht dann, dass Prozesse in der (Fertigungs-/Bearbeitungs-)Umgebung 8, 10 (bis auf unterste Ebenen hinunter, z.B. einem Montieren, einem Wuchten oder einem Voreinstellen) auch jederorts und jederzeit vollständig überwachbar und steuerbar werden - und so eine Vollautomatisierung - in der Bearbeitungsumgebung 8, wie auch in der Fertigungsumgebung 10 möglich wird.

Anders ausgedrückt, die Vergabe der eineindeutigen Kennzeichnung 40 bzw. der "UniqueID" 40 für/an ein spezifisches Gesamtwerkzeug 6 (in der Bearbeitungsumgebung 8) kann wesentlich sein für eine (individuelle) Überwachung, Nachverfolgung, Protokollierung des Gesamtwerkzeugs 6 in/bei Prozessen in der Bearbeitungsumgebung 8 (, wie dann auch in der Fertigungsumgebung 10). Dies wiederum ist wesentlich für eine Vollautomatisierung (bei dem Gesamtwerkzeugerstellungsprozess 20, wie auch bei dem (Bauteil-)Fertigungsprozess 18).

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### "Incorporate by reference" - DE 10 2024 122 026.0 - Verfahren und Vorrichtung zum autonomen Vermessen eines Werkzeugs oder eines Komplettwerkzeugs

Diese Erfindung betrifft ein Verfahren und eine Vorrichtung zum autonomen Vermessen eines Werkzeugs oder eines Komplettwerkzeugs aus einer Werkzeugaufnahme und einem in der Werkzeugaufnahme eingespannten Werkzeug.

Es ist üblich, ein Komplettwerkzeug aus einer Werkzeugaufnahme und einem in der Werkzeugaufnahme eingespannten, beispielsweise eingeschrumpften, Werkzeug, beispielsweise einem einschrumpften Fräs- oder eingespannten Schneidwerkzeug, vor der Kopplung mit einer, beispielsweise als CNC-Bearbeitungsmaschine ausgebildeten, Werkzeugmaschine mittels einer Vorrichtung zum Vermessen eines Werkzeugs, kurz auch nur "Voreinstellgerät" genannt, zu vermessen ("Voreinstellung") .

Die so mit dem Voreinstellgerät ermittelten (geometrischen) Maße des Werkzeugs bzw. Komplettwerkzeugs werden dann zur Optimierung der Werkstückbearbeitung in der Werkzeugmaschine der Werkzeugmaschine zur Verfügung gestellt bzw. dort verwendet.

Durch die Voreinstellung wird insbesondere sichergestellt, dass ein Werkstück bearbeitende Teile des Werkzeugs, wie beispielsweise eine Schneidkante eines Schneid-/Fräswerkzeugs, die für die geplante Bearbeitung des Werkstücks auf der Werkzeugmaschine akzeptablen Positionsmaße haben. Vereinfacht und allgemein ausgedrückt, es erfolgt eine Überprüfung und Inspektion von Werkzeugen auf Maßhaltigkeit aller relevanten Maße und Merkmalen.

Mittels eines solchen Voreinstellgeräts werden dabei insbesondere die Länge des Komplettwerkzeugs, der Durchmesser und/oder die Schneidenform des eingespannten Werkzeugs bzw. Schneid-/Fräswerkzeugs - und gegebenenfalls verschiedene weitere Abmessungen des bzw. bei dem Werkzeug bzw. Komplettwerkzeug gemessen.

Sind diese Daten unmittelbar für die Qualität der Werkstückbearbeitung des Werkstücks in der Werkzeugmaschine relevant, so hat die Werkzeugvermessung in dem Voreinstellgerät unter großer (Wiederhol-)Genauigkeit zu erfolgen.

Eine solche Vermessungseinrichtung bzw. ein solches Voreinstellgerät ist beispielsweise durch das Voreinstellgerät der Baureihe "UNO" oder der Baureihe "VIO" der Fa. Haimer bekannt.

Diese bekannte Vermessung von Komplettwerkzeugen, beispielsweise mittels der bekannten Voreinstellgeräte, erfolgt in der Regel automatisiert bzw. automatisch, um einen möglichst fehlerfreien und sicheren sowie rationellen und effektiven Prozess - beispielsweise im Rahmen automatischer industrieller Fertigungsprozesse - zur Verfügung zu stellen.

Allerdings bedeutet automatisch an dieser Stelle, dass zwar wesentliche Teilabläufe/-prozesse bei der Werkzeugvermessung ohne Einwirkung eines Bedieners ablaufen (können), wie beispielsweise bestimmte Vermessungsprozesse, aber ein völlig bedienerunabhängiger Prozess, d.h. ein autonomer Prozess, noch nicht realisiert ist. D.h., auch bei diesem automatischen Prozess bzw. bei dieser automatischen Werkzeugvermessung nach dem Stand der Technik sind Bedienerhandlungen, wie beispielsweise Eingaben von Werkzeugdaten und/oder Identifizierungsinformationen für das Werkzeug bzw. Komplettwerkzeug bis hin zur kompletten Programmierung eines Messablaufes in eine Vermessungssteuerung, erforderlich.

Dieses ist unter anderem auch darauf zurückzuführen, dass bei bekannten Werkzeugvermessungen dortige Teilprozessschritte höchst komplex und gegebenenfalls unzureichend strukturiert sind, was erwähnte Bedienerhandlungen/-eingaben erfordert, - und damit sich der Prozess als Ganzes nicht "autonomisierbar" erweist. D.h., ein vollständig autonomer Prozess kann im Stand der Technik nicht zur Verfügung gestellt werden.

Es ist Aufgabe dieser Erfindung, die im Stand der Technik bekannte Vermessung von Werkzeugen bzw. Komplettwerkzeugen insbesondere dahingehend zu verbessern, dass diese vollständig bedienerunabhängig bzw. bedienerfrei, d.h. autonom, durchführbar wird bzw. ist.

Diese Aufgabe wird gelöst durch ein Verfahren und eine Vorrichtung zum autonomen Vermessen eines Werkzeugs oder eines Komplettwerkzeugs aus einer Werkzeugaufnahme und einem in der Werkzeugaufnahme eingespannten Werkzeug - mit den Merkmalen des jeweiligen unabhängigen Anspruchs.

Vorteilhafte Weiterbildungen dieser Erfindung sind Gegenstand abhängiger Ansprüche sowie der nachfolgenden Beschreibung und beziehen sich sowohl auf die erfindungsgemäße Vorrichtung wie auch auf das erfindungsgemäße Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel-/Längs- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

"Autonom" bedeutet - in Abgrenzung zu "automatisiert" -, dass - abgesehen vom Auslösen eines Startsignales - kein Bedienereingriff bzw. keine Bedienerhandlung notwendig ist bzw. ein derartiger "autonomer Prozess" - unter Einsatz entsprechender Vorrichtungen - völlig selbständig (und bedienerfrei) ablaufen kann.

Im Folgenden soll - der Einfachheit halber - bei der Verwendung des Begriffes "Werkzeug" auch das "Komplettwerkzeug" aus einer Werkzeugaufnahme und einem in der Werkzeugaufnahme eingespannten Werkzeug mitgemeint sein.

Bei dem **Verfahren** zur autonomen Vermessung eines (kurz) Werkzeugs wird zunächst autonom eine Art des Werkzeugs bestimmt.

Als Art des Werkzeugs kann insbesondere ein Rotationswerkzeug und/oder ein spanabhebendes Werkzeug, beispielsweise ein Fräswerkzeug ggfl. mit Wendeplatten, ein Bohrwerkzeug, ein Drehwerkzeug ggfl. mit Schneidplatten oder eine Schleifscheibe, bestimmt werden.

Insbesondere ist hierbei auch zweckmäßig, wenn die Bestimmung der Art des Werkzeugs unter Verwendung
K(ünstlicher)I(ntelligenz) basierter Bildverarbeitung erfolgt.

**Dann** wird autonom - abhängig von der Art des Werkzeugs - ein das Werkzeug auszeichnender Punkt am Werkzeug bestimmt.

Zweckmäßig ist es, wenn der Punkt - beispielsweise bei einem Bohrwerkzeug - ein oberster (bzw. höchster) Punkt des Werkzeugs ist oder der Punkt - beispielsweise bei einem Fräswerkzeug oder einer Schleifscheibe - ein Punkt auf einer Außenkante des Werkzeugs ist.

**Ausgehend** von diesem Punkt werden autonom Funktionsgeometrien des Werkzeugs vermessen.

Eine solche Funktionsgeometrie kann beispielsweise eine Schneide eines spanabhebenden Werkzeugs, wie ein Fräswerkzeug oder auch Bohrwerkzeug, oder ein Schleifscheibenkantenbereich bei einer Schleifscheibe sein.

Zweckmäßig ist es insbesondere, wenn das Werkzeug bei der Vermessung, insbesondere eingespannt in einer Spindel, um seine Längsachse bzw. Mittelachse gedreht bzw. rotiert wird, wobei bei Drehung bzw. Rotation autonom die Funktionsgeometrie (z.B. eine Schneide) erkannt und diese vermessen wird.

Dieser Vorgang aus Drehung/Rotation, Erkennung und Vermessung kann zumindest solange wiederholt durchgeführt werden, bis das Werkzeug eine vollständige Umdrehung um seine Längsachse bzw. Mittelachse vollzogen hat. Dann sind alle Funktionsgeometrien/Schneiden am Werkzeug erkannt (max. Anzahl) und alle Funktionsgeometrien/Schneiden vermessen worden.

Auch für diese Erkennung von der bzw. den Funktionsgeometrien kann K(ünstliche)I(ntelligenz) basierte Bildverarbeitung eingesetzt werden.

Vorteilhaft ist es weiter auch, wenn die vermessene Funktionsgeometrie/-en des Werkzeugs als Referenz hinterlegt und/oder gespeichert wird/werden, wobei insbesondere bei einer Wiedervermessung des Werkzeugs die neuvermessene Funktionsgeometrie/-en mit der Referenz verglichen wird bzw. werden (beispielsweise durch Bildvergleich).

Auch hier kann K(ünstliche)I(ntelligenz) basierte Bildverarbeitung zum Einsatz kommen.

Durch diesen Vergleich - von neuer Funktionsgeometrie und Referenz - kann insbesondere Verschleiß an einer Funktionsgeometrie und/oder eine defekte Funktionsgeometrie erkannt bzw. ermittelt werden.

**Anschließend** wird autonom aus den vermessenen Funktionsgeometrien eine Summengeometrie bei dem Werkzeug ermittelt.

Hier ist es insbesondere zweckmäßig, wenn die Summengeometrie - beispielsweise dargestellt über ein Summenbild - aus einer Überlagerung der vermessenen Funktionsgeometrien eines Werkzeugs ermittelt wird, wobei die Summengeometrie insbesondere ein Verlauf einer maximalen Außenkontur (insbesondere radial wie axial) bei dem Werkzeug bzw. Komplettwerkzeug ist.

Weiter kann es dann vorteilhaft sein, wenn - unter Verwendung der Summengeometrie des Werkzeugs -, insbesondere zusammen mit einer Minimalkontur des Werkzeugs, ein Rundlauf und/oder eine Planheit und/oder eine Rundheit bei dem Werkzeug ermittelt wird.

Unter einer solchen Minimalkontur können beispielsweise - im Vergleich zur Kontur der Summengeometrie - radial weiter innen (d.h. näher an der Mittel- bzw. Längsachse des Werkzeugs) liegende (, vermessene) Konturen bzw. Funktionsgeometrien, wie insbesondere radial weiter innenliegende Schneiden oder Schleifscheibenkantenbereiche, gemeint sein.

Auch ist es zweckmäßig, das Summenbild und/oder die Summengeometrie und/oder die Minimalkontur eines Werkzeugs als Referenz zu speichern, wobei auch hier dann insbesondere bei einer Wiedervermessung des Werkzeugs die dann entsprechend neu bestimmen Summenbilder und/oder Summengeometrien und/oder Minimalkonturen mit ihrer jeweiligen Referenz verglichen werden können (beispielsweise durch Bildvergleich).

Auch hier kann K(ünstliche)I(ntelligenz) basierte Bildverarbeitung zum Einsatz kommen.

Durch diesen Vergleich kann insbesondere dann auch Verschleiß am Werkzeug erkannt bzw. ermittelt werden.

Weiterhin ist es besonders vorteilhaft, wenn das Werkzeug abgescannt wird, wobei insbesondere ein 2D Scan und/oder ein 3D Scan durchgeführt - und ein entsprechendes digitales Abbild des Werkzeugs generiert - wird.

So kann hierdurch ein digitaler Zwilling - wie in der DE 10 2017 117 840 A1 beschrieben, welche hiermit mit ihrem Inhalt zum auch zum Gegenstand der Anmeldung gemacht wird ("incorporate by reference"), - und/oder ein kollisionsrelevanter bzw. zerspanungsrelevanter digitaler Zwilling - wie in der DE 10 2022 123 017 A1 beschrieben, welche hiermit mit ihrem Inhalt zum auch zum Gegenstand der Anmeldung gemacht wird ("incorporate by reference"), - des Werkzeugs ermittelt werden.

Zweckmäßig ist es dann auch, wenn die Vermessung/-en des Werkzeugs, wie deren Funktionsgeometrie/-en und der (kollisionsrelevanter/zerspanungsrelevanter) digitale Zwilling verglichen werden.

Dieser Vergleich kann insbesondere bezüglich bzw. in einer vorhandenen Werkzeug- oder Komplettwerkzeughöhe oder bezüglich bzw. in verschiedenen gegebenenfalls vorhandenen Werkzeug- oder Komplettwerkzeughöhen (2./3. Ebene usw.) durchgeführt werden.

Hierzu ist es auch zweckmäßig, das **Verfahren** nicht nur in einer (ersten) axialen Höhe/Ebene am Werkzeug durchzuführen. D.h., das **Verfahren** kann zweckmäßig auch in anderen axialen Höhen (z-Achse) (z.B. zweite/dritte Ebene usw.) an dem Werkzeug durchgeführt werden, beispielsweise dort, wo sich der Durchmesser eines Werkzeugs ändert (z.B. Stufen bei einem "Stufenbohrer") und/oder dort, wo andere bzw. zusätzliche Funktionsgeometrien, beispielsweise (weitere) Wende-/Schneidplatten an einem Werkzeug angeordnet sind, und/oder in einer (beliebig) anderen gegebenenfalls vorhandenen (axialen) Höhe.

Hier kann dann eine/die Vermessungseinheit autonom in z-Achsenrichtung/vertikal - beispielsweise an einer Außenkante des Werkzeuges entlang - bis in eine (weitere) Ebene verfahren, wo - von ihr - weitere Funktionsgeometrien erkannt werden - und wo sich das beschriebene Messprozedere wiederholt.

Weiterhin kann es zweckmäßig sein, wenn vermessene Oberflächenpunkte des Werkzeugs - insbesondere unter Verwendung K(ünstlicher) I(ntelligenz) basierter Bildverarbeitung - zu einer Kontur des Werkzeugs bzw. Komplettwerkzeugs verbunden werden.

Nach einer bevorzugten Ausführung ist vorgesehen, dass das **Verfahren** mit bzw. bei/an einem Rotationswerkzeug und/oder einem spanabhebenden Werkzeug, wie einem Fräswerkzeug, einem Bohrwerkzeug oder einer Schleifscheibe, durchgeführt wird.

Ferner kann - gemäß einer besonders bevorzugten Weiterbildung - das **Verfahren** einen oder mehrere der folgenden Schritte, bevorzugt in angegebener Reihenfolge, aufweisen:

So kann ein höchster Punkt des Werkzeugs (vgl. der das Werkzeug auszeichnende Punkt) auf einer Mittelachse (Längsachse) des Werkzeugs (z-Achse) bestimmt werden. D.h., es wird die Mittelachse (Längsachse) des Werkzeugs (z-Achse) angefahren; auf dieser wird dann der oberste bzw. höchste Punkt des Werkzeugs bestimmt.

Es kann (dann), insbesondere unter Verwendung des höchsten Punktes, geprüft werden, ob eine Spitze an dem Werkzeug vorhanden ist. Dazu können beispielsweise auch Mittel der K(ünstlichen) I(ntelligenz) bzw. Bildverarbeitung auf Basis von K(ünstlicher) I(ntelligenz) eingesetzt werden.

Auch kann dies beispielsweise derart ausgeführt werden, dass Nachbarpunkte des Werkzeugs zu dem höchsten Punkt gesucht/vermessen werden. Liegen diese - axial (in Mittelachsen/Längsachsen- bzw. z-Achsen-Richtung) - unterhalb dem höchsten Punkt, so kann eine Spitze (bei dem höchsten Punkt) angenommen werden.

Im Falle einer Spitze - kann (dann) als Art des Werkzeugs ein Bohrwerkzeug bestimmt werden.

Im Falle keiner Spitze - kann (dann) eine radial äußere Kante an dem Werkzeug (vgl. der das Werkzeug auszeichnende Punkt) bestimmt werden und es können (dann), insbesondere unter Verwendung der radial äußeren Kante, Schneiden (vgl. Funktionsgeometrie) an dem Werkzeug bestimmt werden. Dies kann insbesondere unter Verwendung von vorgegebenen Vergleichsmustern (mit ggfl. KI) erfolgen.

Die Schneiden können dann vermessen werden.

Werden Schneiden gefunden (und ggfl. Vermessen), so kann dann ferner auch von einem Fräswerkzeug bei dem Werkzeug ausgegangen werden. Fehlt es auch an solchen, könnte auch - bei dem Werkzeug - eine Schleifscheibe angenommen werden -, deren umlaufende Schleifscheibenkante (vgl. Funktionsgeometrie) vermessen werden kann.

Besonders vorteilhaft ist es insbesondere auch, wenn das **Verfahren** bzw. wenn das Werkzeug unter Verwendung der **Vorrichtung** zum autonomen Vermessen eines Werkzeugs oder eines Komplettwerkzeugs durchgeführt bzw. gemäß dem **Verfahren** bearbeitet wird.

Die **Vorrichtung** zum autonomen Vermessen eines Werkzeugs oder eines Komplettwerkzeugs aus einer Werkzeugaufnahme und einem in der Werkzeugaufnahme eingespannten Werkzeug sieht eine Vermessungseinheit und einer Rechen- und Steuereinheit vor.

Die Vermessungseinheit und/oder die Rechen- und Steuereinheit sind derart eingerichtet, dass zunächst autonom eine Art des Werkzeugs bestimmbar ist, dann autonom abhängig von der Art des Werkzeugs ein das Werkzeug auszeichnender Punkt am Werkzeug bestimmbar ist, ausgehend von diesem Punkt autonom Funktionsgeometrien des Werkzeugs vermessbar sind und anschließend autonom aus den vermessenen Funktionsgeometrien eine Summengeometrie bei dem Werkzeug ermittelbar ist.

Zweckmäßig ist es insbesondere, wenn die Vermessungseinheit und/oder die Rechen- und Steuereinheit eingerichtet ist zur Durchführung des **Verfahrens** oder erfindungsgemäßer Verfahrensschritte.

Dabei kann eine "...einheit", wie die Vermessungseinheit und die Rechen- und Steuereinheit, insbesondere auch einen Prozessor, eine Speichereinheit, eine Schnittstelle und/oder ein, insbesondere in der Speichereinheit gespeichertes, Betriebs-, Steuer- und Berechnungsprogramm aufweisen.

Gegebenenfalls kann die Vermessungseinheit und/oder die **Vorrichtung** eine Steuereinheit aufweisen, die für eine entsprechende Ansteuerung der Vermessungseinheit zur Durchführung eines der vorbeschriebenen erfindungsgemäßen **Verfahren** oder erfindungsgemäßer Verfahrensschritte sorgt.

Nach einer Ausgestaltung kann vorgesehen sein, dass die Vermessungseinheit eine oder mehrere optische und/oder berührungslos messende Messvorrichtungen aufweist, beispielsweise eine digitale Kamera und/oder ein Radar und/oder ein Lidar und/oder eine nach einem Durch- oder Auflichtverfahren arbeitende Messvorrichtung, insbesondere mit einem (digitalen) Bildsensor. Auch andersartige Messvorrichtungen können alternativ vorgesehen sein, wie beispielsweise ein Laservorhang - oder auch andere taktile oder optische Messsysteme.

Weiterhin kann es hier zweckmäßig sein, wenn - bei mehreren Messvorrichtungen - das Werkzeug oder das Komplettwerkzeug bzw. deren Funktionsgeometrie aus verschiedenen Perspektiven (Achsen) vermessen wird, insbesondere bei Drehwerkzeugen, wodurch insbesondere Stellungen von Funktionsgeometrien, wie beispielsweise von Schneiden oder Schneidplatten, bestimmt werden können.

Auch ist es vorteilhaft, wenn die Art der Messvorrichtung abhängig von einer Anforderung an eine Messgenauigkeit gewählt wird.

Ein **Bearbeitungszentrum** sieht die **Vorrichtung** sowie eine Werkzeugmaschine vor.

Zweckmäßig ist es hier insbesondere, wenn die **Vorrichtung** und die Werkzeugmaschine auf einem gemeinsamen Sockel montiert sind und/oder wenn die **Vorrichtung** in die Werkzeugmaschine (funktionell und/oder bauteilseitig) in die Werkzeugmaschine integriert ist.

Diese Erfindung geht von der Erkenntnis aus, dass ein autonomes Vermessen eines Werkzeugs nur dann realisierbar wird bzw. ist, wenn - einerseits - jeder Prozess-/Verfahrensschritt für sich automatisierbar ist sowie alle Prozess-/Verfahrensschritte gemeinsam in einer integrierten Arbeitsumgebung, beispielsweise in einer einzigen Vorrichtung, wie ein Voreinstellgerät, durchführbar sind, - andererseits - zu Beginn jedes Prozess-/Verfahrensschritt jeweils jede für den jeweiligen Prozess-/Verfahrensschritt notwendige Information bereits vorhanden ist.

Ausgehend davon generiert diese Erfindung ein bestimmtes, überraschend einfaches, erfindungsgemäßes bzw. erfinderisches Verfahrensregime mit speziell sortierter Abfolge von automatisierbaren bzw. automatisierten Prozess-/Verfahrensschritten, welches Verfahrensregime obige Voraussetzungen erfüllt bzw. gewährleistet.

Damit können bei dem erfindungsgemäßen bzw. erfinderischen Verfahrensregime Bedienerhandlungen unterbleiben, sind diese hier nicht notwendig, - und das sich aus dem erfindungsgemä-ßen bzw. erfinderischen Verfahrensregime ergebende autonome Verfahren zur Vermessung eines Werkzeugs wird - als Ganzes - völlig autonom durchführbar.

Dadurch kann diese Erfindung dann einen fehlerfreien und sicheren sowie hoch rationellen und hoch effektiven Prozess - beispielsweise im Rahmen automatischer industrieller Fertigungsprozesse - zur Verfügung zu stellen. Diese Erfindung liefert so einen wertvollen Beitrag zur intelligenten Vernetzung von Maschinen und Abläufen in der Industrie/industriellen Fertigung, d.h. zur Industrie 4.0.

Ein weiterer Aspekt dieser Erfindung betrifft eine Vorrichtung zum autonomen Vermessen eines Werkzeugs oder eines Komplettwerkzeugs, insbesondere die **Vorrichtung,** welche ein Lesegerät zum Lesen von Daten eines an einer Werkzeugaufnahme angeordneten Datenträgers an einem Messeinrichtungsträger der Vorrichtung vorsieht.

Die bisher gegebene Beschreibung vorteilhafter Ausgestaltungen dieser Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen - auch zwischen den Anordnungen/Vorrichtungen und Verfahren - zusammengefasst werden.

Auch wenn in der Beschreibung bzw. in den Patentansprüchen einige Begriffe jeweils im Singular oder in Verbindung mit einem Zahlwort verwendet werden, soll der Umfang dieser Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele dieser Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung dieser Erfindung und beschränken diese Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1-1: ein Voreinstellgerät, mittels welchem eine autonome Vermessung eines Werkzeugs durchführbar ist, gemäß einer erfindungsgemäßen Ausführung,
- FIG 2-1: ein Steuermenü bei dem Voreinstellgerät nach FIG 1-1, welches eine autonome Vermessung eines Werkzeugs verdeutlicht, gemäß einer erfindungsgemäßen Ausführung,
- FIG 3-1: einen Ausschnitt aus dem Steuermenü nach FIG 2-1 bei dem Voreinstellgerät nach FIG 1-1, welches eine autonome Vermessung eines Werkzeugs verdeutlicht, gemäß einer erfindungsgemäßen Ausführung,
- FIG 4-1: ein Summenbild (mit einer Summengeometrie und einer Minimalkontur) eines Fräswerkzeugs, welches/welche bei einer autonomen Vermessung eines Werkzeugs, gemäß einer erfindungsgemäßen Ausführung, generiert wird,
- FIG 5-1: einen Messeinrichtungsträger bei einem Voreinstellgerät mit integriertem Lesegerät, gemäß einer erfindungsgemäßen Ausführung.

### Autonome Vermessung eines Werkzeugs (FIGen 1-1 bis 4-1)

FIG 1-1 zeigt ein Werkzeugvoreinstellgerät 2 bzw. kurz Voreinstellgerät 2 - zum Vermessen eines Werkzeugs 4 bzw. Komplettwerkzeugs 6 (Werkzeugaufnahme 8 und Werkzeug 4) im Detail.

Das Voreinstellgerät 2 weist eine optische Messvorrichtung 10, in Form einer Kameravorrichtung 10, auf, mittels welcher von dem Werkzeug 4 bzw. Komplettwerkzeug 6 Informationen aufnehmbar sind - kurz und einfach gesagt, dieses vermessbar ist.

Zudem weist das Voreinstellgerät 2 eine Rechen- und Steuereinheit 34 auf, die u.A. einen Prozessor, eine Speichereinheit (kurz Speicher), eine Schnittstelle mit der Kameravorrichtung, eine Schnittstelle 36 mit einer Werkzeugmaschine und in der Speichereinheit gespeicherte, durch die Rechen-und Steuereinheit 34 ausführbare, über ein Anzeigemittel 38 und Eingabemittel 40 "bedienbare" Berechnungs- und Betriebsprogramme, wie die hier im Mittelpunkt stehende **autonome Vermessung eines Werkzeugs 4 ("Maximum SE")** - und weiter auch die Generierung der Daten für einen kollisionsrelevanten digitalen Zwilling und einen zerspanungsrelevanten digitalen Zwilling eines Werkzeugs 4 bzw. Komplettwerkzeugs 6, wie es in der DE 10 2022 123 017 A1 beschrieben ist, umfasst.

Die Rechen- und Steuereinheit 34 ist - mittels entsprechender Berechnungs- und Betriebsprogramme - darüber hinaus auch dazu vorgesehen, eine übliche Vermessung eines Werkzeugs 4 bzw. eines Komplettwerkzeugs 6 - unter Verwendung der Kameravorrichtung 10 - ablaufen zu lassen bzw. durchzuführen, wobei übliche Voreinstelldaten von dem Werkzeug 4 bzw. dem Komplettwerkzeug 6 generiert werden.

Des Weiteren ermöglicht die Rechen- und Steuereinheit 34 - ebenfalls mittels entsprechender Berechnungs- und Betriebsprogramme und unter Verwendung der Kameravorrichtung 10 -, Daten des Werkzeugs 4 bzw. des Komplettwerkzeugs 6 für eine Kollisionsprüfung zu generieren, nämlich den kollisionsrelevanten und den zerspanungsrelevanten digitalen Zwilling.

Die bzw. alle Vermessungs- bzw. Voreinstelldaten - inkl. der aus der **autonomen Vermessung eines Werkzeugs 4 ("Maximum SE")** (zusammen kurz nur Vermessungs- bzw. Voreinstelldaten) - und/oder Daten des kollisionsrelevanten und des zerspanungsrelevanten digitalen Zwillings, kurz der kollisionsrelevante und der zerspanungsrelevante digitale Zwilling, können - in Form eines oder mehrerer Datensätze - in digitaler Form für eine maschinelle Weiterverarbeitung bereitgestellt werden, zum Beispiel in den Datenformaten VDA-FS, IFC, IGES, STEP, STL und DXF.

Im vorliegenden Fall werden getrennte Datensätze von Vermessungsdaten, Voreinstelldaten und den digitalen Zwillingen, wie auch ein gemeinsamer Datensatz der digitalen Zwillinge, bereitgestellt.

Über die Schnittstelle 36 mit der Werkzeugmaschine (nicht gezeigt) können die Daten bzw. die Datensätze an die Werkzeugmaschine übertragen/-mittelt werden (, wo mittels der Daten u.A. die simulierte Kollisionsprüfung durchführbar ist bzw. durchgeführt wird).

Das Voreinstellgerät 2 weist ferner, wie FIG 1-1 zeigt (vgl. auch FIGen 2-1 bis 4-1), das Anzeigemittel 38 in Form eines Monitors 38 (mit Funktionalität eines Touchscreens) und das Eingabemittel 40 auf, welches als (separate) Tastatur 40 ausgebildet ist. Darüber hinaus ist das Eingabemittel 40 auch als Touchscreen funktionaler Monitor 38 ausgebildet.

Über die Tastatur 40 und den Touchscreen 38 kann ein Bediener die Berechnungs- und Betriebsprogramme bedienen, wobei Funktionalitäten, Daten und Statusanzeigen der Berechnungs- und Betriebsprogramme am Monitor 38 angezeigt (und darüber auch bedienbar) werden, - und eine Weitergabe der Daten bzw. der Datensätze an die Werkzeugmaschine - über die Schnittstelle 36 - auslösen.

Wie FIG 1-1 auch zeigt, ist das Komplettwerkzeug 6 auf einer Spindel 42 angeordnet, welche - insbesondere auch von einem nicht näher dargestellten Aktuator automatisch - gesteuert mittels eines entsprechenden Funktionsprogramms - um eine Rotations-/Mittel- bzw. Längsachse 46 (z-Achse) drehbar ist.

Die erwähnte Kameravorrichtung 10 des Voreinstellgeräts 2 ist als ein Durchlichtsystem ausgebildet. Dabei liegen eine Kamera 48 und ein Beleuchtungsmittel 50 auf gegenüberliegenden Seiten eines auf der Spindel 42 angeordneten Komplettwerkzeugs 6. Die Kameravorrichtung 10 ist auf einem Schlitten 52 montiert - und ist entlang zweier Achsen ("x" und "z") manuell, wie insbesondere auch automatisch - gesteuert mittels eines entsprechenden Funktionsprogramms - verfahrbar.

Des Weiteren steht eine Schnittstelle für einen Drucker 54 zur Verfügung.

**Funktionsprogramm" autonome Werkzeugvermessung" ("Maximum SE")**

FIGen 2-1 bis 4-1 verdeutlichen den Ablauf des Funktionsprogramms zur **autonomen Vermessung eines Werkzeugs bzw. Komplettwerkzeugs.**

FIG 2-1 zeigt das Steuermenü bzw. Bedien- und Anzeigenoberfläche 32, wie es auf dem Anzeigemittel 38/Monitor/Touchscreen 38 des Voreinstellgeräts 2 angezeigt wird - und über welches/welchen die **autonome Vermessung eines Werkzeugs bzw. Komplettwerkzeugs** durchgeführt bzw. gestartet wird.

Dargestellt auf der linken Seite der Bedienoberfläche 32 sind verschiedene Funktionsprogramme des Voreinstellgeräts 2 - in Form von angeordneten Funktionsbutton 44, wie eben auch das Funktionsprogramm zur **autonomen Vermessung eines Werkzeugs bzw. Komplettwerkzeugs,** betitelt **"Maximum SE"** (vgl. Kennzeichnung durch Umrandung, Fig. 2).

Durch Berührung des Funktionsbuttons 44 "Maximum SE" wird die **autonome Vermessung eines Werkzeugs bzw. Komplettwerkzeugs** gestartet -, welche dann im Folgenden völlig bedienerfrei bzw. autonom abläuft. D.h., es kann ein beliebiges und zu diesem Zeitpunkt unbekanntes Werkzeug vermessen werden (und als neues Werkzeug in der Werkzeugverwaltung (als Datensatz) angelegt werden) - ohne weitere Bedienerassistenz.

Die Kameravorrichtung 10 "sucht" sich das in der Spindel 42 gespannte/gehaltene (beliebige und "unbekannte") Werkzeug 4. D.h., die Kameravorrichtung 10 verfährt autonom solange entlang der Mittelachse 46 des Werkzeugs (z-Achse), bis sie (dort) "erste Teile/Bereiche" des Werkzeugs 4 erfasst/erkennt. Dabei verfährt sie autonom auf Höhe des höchsten Punktes 12 des in der Spindel 42 gespannten/gehaltenen Werkzeugs 4.

So kann dadurch ein höchster bzw. oberster Punkt 12 des Werkzeugs 4 auf der Mittelachse (Längsachse) 46 des Werkzeugs (z-Achse) bestimmt werden.

Unter Verwendung des höchsten Punktes 12 wird dann geprüft, ob eine Spitze 14 an dem Werkzeug 4 vorhanden ist. Dazu werden hier Mittel einer Bildverarbeitung auf Basis von K(ünstlicher) I(ntelligenz) eingesetzt.

Alternativ könnte dies auch derart realisiert werden, dass Nachbarpunkte zu dem höchsten Punkt 12 am Werkzeug 4 gesucht/vermessen werden. Liegen diese - axial (in Mittelachsen/Längsachsen- bzw. z-Achsen-Richtung) - unterhalb dem höchsten Punkt 12, so kann eine Spitze 14 (bei dem höchsten Punkt 12) angenommen werden.

Im Falle einer Spitze 14 - wird dann das - bislang "unbekannte" Werkzeug 4 - als Bohrwerkzeug bestimmt/klassifiziert. Die weitere Vermessung von Funktionsgeometrien 16 eines "Bohrwerkzeugs" (kurz auch nur "Bohrer") folgen.

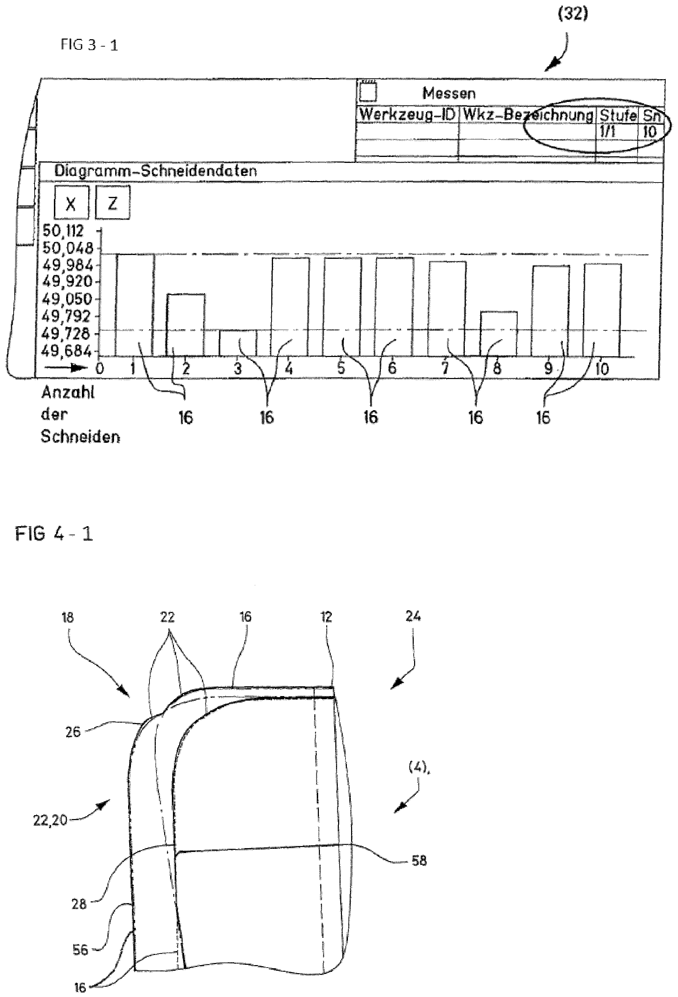

Da es sich aber - im vorliegenden Fall - bei dem "unbekannten" Werkzeug 4 um ein (zehnschneidiges) Fräswerkzeug handelt (vgl. FIG 3-1) wird keine Spitze 14 bei dem Werkzeug 4 gefunden werden - und dieses Werkzeug 4 so auch nicht als Bohrwerkzeug eingestuft/erkannt.

Im Falle dieser "keinen Spitze" bei dem Werkzeug 4 wird dann eine radial äußere Kante 18 an dem Werkzeug bestimmt. D.h., die Kameravorrichtung 10 verfährt radial nach außen (x-Achse) - an den radial äußeren Rand 20 des Werkzeugs 4.

Die Kameravorrichtung 10 erfasst den radial äußeren Rand 20 - und die Spindel 42 beginnt das in sie eingespannte Werkzeug 4 bzw. Komplettwerkzeug 6 (um ihre Längs-/Mittel- bzw. z-Achse 46) zu drehen.

Währenddessen das Werkzeug 4 rotiert, bestimmt die Kameravorrichtung 10 kontinuierlich die Kontur 22 des Werkzeugs 4 in der jeweiligen Drehposition. Die bestimmten Konturen 22 werden, hier unter Verwendung vorgegebener Vergleichsmuster, dahingegen ausgewertet, ob eine Schneide 16 (Funktionsgeometrie 16) des Werkzeugs 4 im Konturverlauf (der jeweiligen Drehposition des Werkzeugs 4) erkennbar ist. Wird eine Kontur 22 als Schneide 16/Funktionsgeometrie 16 erkannt, wird diese auch vermessen.

Das Werkzeug 4 wird komplett mindestens einmal um ihre Mittel- bzw. Längs- bzw. z-Achse 46 rotiert (360°), wobei so-am Ende des Rotationsvorgangs - alle (ggfl. bei einem Schneid- bzw. Fräswerkzeug vorhanden) Schneiden 16 (Funktionsgeometrien 16) erkannt - und dann in solchem Falle auch vermessen wurden.

Damit steht jetzt fest, ob es sich bei dem Werkzeug 4 (a) um ein Fräs- bzw. Schneidwerkzeug handelt - und (b) ein Wieviel-Schneider hierbei vorliegt.

Im vorliegenden, hier beschrieben Fall wurden Schneiden 16 (Funktionsgeometrien 16) - in der Anzahl zehn - erkannt und vermessen, wobei so das "unbekannte" Werkzeug jetzt als zehnschneidiges Fräswerkzeug identifiziert und entsprechend klassifiziert wurde.

FIG 2-1, im Detail davon FIG 3-1 zeigen die Vermessung der (in diesem Fall zehn) Schneiden 16 (Funktionsgeometrien 16) des - in diesem Fall - Fräswerkzeugs.

Wie die FIGen 2-1 und 3-1 (Ausschnitt der Bedienoberfläche/Touchscreen 38) erkennen lassen, sind - in diesem Fall - die "x"-Abmessungen, d.h. das Radialmaß, der zehn Schneiden 16 graphisch (in Balkenform (Höhe des Balkens entsprechend Radialmaß) dargestellt. Durch ein "Umschalten" auf das "z"-Maß, werden dann auch die jeweiligen "z"-Maße (z-Achse) der zehn Schneiden 16 entsprechend dargestellt. In einer Variante könnten x- und z-Maße auch gleichzeitig in überlagerter Form angezeigt werden.

Die jeweiligen Darstellungen ermöglichen es, schnell und einfach Unterschiede in den Schneiden 16 bzw. deren Zustände erkennen zu können, z.B. die am weitesten außenliegende Schneide 56 (vgl. FIG 4-1) (FIGen 2-1 und 3-1 - Schneide 1) vs. die am weitesten innenliegende Schneide 58 (FIG 4-1) (FIGen 2-1 und 3-1 - Schneide 3) (vgl. FIG 2-1 bzw. FIG 3-1 - entsprechend durch die beiden Geraden markiert) bzw. die höchste Schneide vs. die niedrigste Schneide.

FIG 4-1 zeigt hierzu ein entsprechendes Summenbild 24, in welchem - unter Verwendung der vermessenen Schneiden 16 - deren Schneidenkonturverläufe zusammen überlagert dargestellt sind.

In dem Summenbild 24 sind, wie FIG 4-1 zeigt, die vermessenen Funktionsgeometrien/Schneiden 16 des Werkzeugs (in "x" und "z") überlagert dargestellt, wodurch sich so - im Bild (auch rechnerisch ermittelbar) - eine maximale Außenkontur 26, bezeichnet als Summengeometrie 26 - hier in "x" und "z" - bei dem Fräs-/Werkzeug 4 zeigt.

Ebenso lässt sich so eine Minimalkontur 28 - beispielsweise ebenfalls aus dem Summenbild 24 - entnehmen bzw. (auch rechnerisch) bestimmen, welche - vereinfacht und anschaulich ausgedrückt (als Pendant zur Summengeometrie 26) - eine "minimale Innenkontur" 28 bildet.

Aus maximaler Außenkontur 26 bzw. Summengeometrie 26 und minimaler Innenkontur 28 (in "x") lässt sich so dann auch ein Rundlauf, eine Planheit und eine Rundheit bei dem Werkzeug 4 ermitteln.

Sind die Schneiden 16 (Funktionsgeometrien 16) des Werkzeugs 4 vermessen, werden diese als Referenz (in einem Speicher bzw. Tool Management System) hinterlegt - und stehen so bei einer Wiedervermessung dieses Werkzeugs 4 als Vergleich für neuvermessene Schneiden 16/Funktionsgeometrien 16 dieses Werkzeugs 4 zur Verfügung.

Aus solch einem Vergleich lassen sich Verschleißinformationen für das Werkzeug 4 ermitteln. Aus den Verschleißinformationen lassen sich dann auch andere Eigenschaften wie z. B. eine Reststandzeit oder einen Reststandweg ableiten.

Sind bei der Konturerkennung (s. oben) keine einzelne/n Schneide/-en 16 erkannt worden, kann bei einem solchen Werkzeug 4 (auch keine Spitze 14 - s. oben) - eine Schleifscheibe 4 angenommen werden -, deren umlaufende Schleifscheibenkante 18 (vgl. Funktionsgeometrie 16) dann vermessen wird. Auch hier können dann Summenbild 24, Summengeometrie 26 und Minimalkontur 28 ermittelt, gespeichert und ausgewertet (z.B. Rundlauf, Planheit, ...) werden.

Wurde bei einem Werkzeug 4 eine Spitze 14 erkannt - und dieses so als Bohrer 4 klassifiziert, dann verfährt die Kameravorrichtung 10 axial in die Höhe, in welcher das Werkzeug/der Bohrer 4 bzw. dessen Bohrspitze seinen maximalen Außendurchmesser aufweist, - und dort radial nach außen - an den radial äußeren Rand 20 des Werkzeugs.

Ab hier erfolgt - bei einem Bohrwerkzeug 4 - das gleiche Prozedere, wie beschrieben, wie bei einem Fräswerkzeug 4.

Die Kameravorrichtung 10 erfasst den radial äußeren Rand 20 - und die Spindel 42 beginnt das in sie eingespannte Werkzeug/Bohrer 4 (um ihre Längs-/Mittel- bzw. z-Achse 46) zu drehen.

Währenddessen das Werkzeug/Bohrer 4 rotiert, bestimmt die Kameravorrichtung 10 kontinuierlich die Kontur 22 des Werkzeugs/Bohrers 4 in der jeweiligen Drehposition. Die bestimmten Konturen 22 werden dahingegen ausgewertet, ob eine Schneide 16 (Funktionsgeometrie 16) des Werkzeugs 4 im Konturverlauf (der jeweiligen Drehposition des Werkzeugs 4) erkennbar ist. Wird eine Kontur 22 als Schneide 16/Funktionsgeometrie 16 erkannt, wird diese auch vermessen.

Das Werkzeug/Bohrer 4 wird komplett um seine Mittel- bzw. Längs- bzw. z-Achse 46 rotiert (360°), wobei so - am Ende des Rotationsvorgangs - alle Schneiden 16 (Funktionsgeometrien 16) erkannt - und dann in solchem Falle auch vermessen wurden. Summenbild 24, Summengeometrie 26 und Minimalkontur 28 sowie Verschleißinformationen werden entsprechend ermittelt, gespeichert und ausgewertet.

Bei der hier beschriebenen **autonomen Vermessung eines Werkzeugs** erfolgt die Vermessung bei dem Werkzeug in "nur" einer (ersten Ebene - vgl. FIGen 2-1 und 3-1 "Stufe 1/1" - durch Umrandung gekennzeichnet), nämlich an der "äußeren Schneidkante" 18 (nahe der Spitze 14 des Werkzeugs 4).

Eine derartige Vermessung, wie beschrieben, kann auch in anderen axialen Höhen (z-Achse) (zweite/dritte Ebene u.s..) an dem Werkzeug 4 durchgeführt werden, beispielsweise dort, wo sich der Durchmesser des Werkzeugs 4 ändert (z.B. Stufen bei einem "Stufenbohrer") und/oder dort, wo andere bzw. zusätzliche Funktionsgeometrien 16, beispielsweise (weitere) Wende-/Schneidplatten (Funktionsgeometrien 16) an einem Werkzeug angeordnet sind, und/oder in einer (beliebig) anderen Höhe.

Hier verfährt dann die Kameravorrichtung 10 an der Außenkante des Werkzeuges 4 entlang bis - in einer weiteren Ebene - weitere Funktionsgeometrien 16 erkannt werden und wo sich das beschriebene Messprozedere (s. oben) wiederholt. Summenbild 24, Summengeometrie 26 und Minimalkontur 28 sowie Verschleißinformationen können auch hier wieder entsprechend ermittelt, gespeichert und ausgewertet werden.

### Funktionsprogramm "digitaler Zwilling"

Der Start des Funktionsprogramm "digitaler Zwilling" erfolgt entsprechend dem oben beschriebenen Funktionsprogramms "Maximum SE", wobei hier dann (nicht gezeigt) autonom oder durch Berührung des Funktionsbuttons "Digitaler Zwilling" auf dem Anzeigemittel 38/Monitor 38 die Generierung des (kollisionsrelevanten) digitalen Zwillings gestartet wird.

### - bei nicht rotierendem Werkzeug

Bei der Generierung des kollisionsrelevanten digitalen Zwillings eines Komplettwerkzeugs 6 - hier für ein nicht rotierendes Werkzeug 4, wie beispielsweise ein Drehwerkzeug 4, - wird dieses abgetastet - und dadurch ein digitales Abbild des Komplettwerkzeugs erstellt.

Die Abtastung erfolgt - in diesem Fall mit nicht rotierendem Werkzeug 4 - durch einen - durch die Kameravorrichtung 10 durchgeführten - 2D Scan des Komplettwerkzeugs 6, wobei eine beidseitige Kontur des Komplettwerkzeugs 6 - in einer vorgegebenen festen Position des Komplettwerkzeugs 6 (feststehende Spindel 42) vermessen wird.

Die Kameravorrichtung 10 fährt dabei automatisiert verschiedene Höhen des Komplettwerkzeugs 6 an und führt in diesen Höhen jeweils eine Aufnahme des Komplettwerkzeugs 6 bzw. eines Ausschnitts des Komplettwerkzeugs 6 durch, aus welchen Aufnahmen dann die Kontur bzw. der Konturverlauf des Komplettwerkzeugs 6 "extrahiert" wird, welcher dann das (zweidimensionale) digitale Abbild bildet.

Dieses geschieht in der Form, dass die Kameravorrichtung 10 schrittweise zunächst von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur der einen Seite des Komplettwerkzeugs 6 ausgerichtet wird - und hierbei die Kontur der einen Seite des Komplettwerkzeugs 6 ermittelbar ist.

Anschließend verfährt die Kameravorrichtung 10 schrittweise von oben nach unten, wobei hier die Kameravorrichtung 10 auf die Kontur der anderen Seite des Komplettwerkzeugs 6 ausgerichtet wird - und hierbei die Kontur der anderen Seite des Komplettwerkzeugs 6 ermittelbar ist.

Zusätzlich zur Abtastung des Komplettwerkzeugs wird weiter dann ein erster Schneidenpunkt, ein Schneidenanfangspunkt, und ein zweiter Schneidenpunkt, ein Schneidenendpunkt, bei dem Werkzeug 4 bzw. dem Komplettwerkzeug 6 mittels der Kameravorrichtung 10 vermessen.

Hierzu kann - wollte man dies nicht autonom durchführen - ein Bediener die Kameravorrichtung 10 in die beiden entsprechenden Höhen verfahren, welche er jeweils über eine Anzeige auf dem Monitor 38 kontrollieren kann, fokussiert dort den Schneidenanfangspunkt bzw. Schneidenendpunkt - und kann dann mittels der Tastatur 40 die jeweilige Vermessung auslösen. Ansonsten erfolgt dies autonom.

In dem digitalen Abbild wird dann unter Verwendung des vermessenen ersten und des vermessenen zweiten Schneidenpunktes bzw. unter Verwendung dieser ermittelter nächstliegender Punkte im digitalen Abbild ein Schneidenbereich ermittelt ("kollisionsrelevanter digitaler Zwilling").

### - bei rotierendem Werkzeug

Bei der Generierung des kollisionsrelevanten digitalen Zwillings eines Komplettwerkzeugs 6 - hier für ein rotierendes Werkzeug 4, wie beispielsweise ein Fräswerkzeug 4, - wird dieses ebenfalls abgetastet - und - in diesem Fall eines rotierenden Werkzeugs 4- ein (dreidimensionales) digitales Abbild des Komplettwerkzeugs 6 erstellt.

Die Abtastung erfolgt - in diesem Fall mit rotierendem Werkzeug 4 - durch einen - durch die Kameravorrichtung 10 durchgeführten - 3D Scan des Komplettwerkzeugs 6, wobei eine einseitige Kontur des Komplettwerkzeugs - bei unterschiedlich gedrehtem Komplettwerkzeug 6 (rotierende Spindel 42) vermessen wird.

Die Kameravorrichtung 10 fährt dabei automatisiert verschiedene Höhen des Komplettwerkzeugs 6 an - und führt in diesen Höhen jeweils Aufnahmen des Komplettwerkzeugs 6 bzw. von einem Ausschnitt des Komplettwerkzeugs 6 in unterschiedlich (mittels der Spindel 42) gedrehten KomplettwerkzeugPositionen durch, aus welchen Aufnahmen dann die Hüllkontur des Komplettwerkzeugs 6 "extrahiert" wird, welche dann das dreidimensionale digitale Abbild bildet.

Dieses geschieht in der Form, dass die Kameravorrichtung 10 schrittweise bevorzugt von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur einer Seite des Komplettwerkzeugs 6 gerichtet wird. In den angefahrenen Höhen werden jeweils verschiedene Aufnahmen des Komplettwerkzeugs 6 gemacht - in jeweils unterschiedlich gedrehten Komplettwerkzeugpositionen.

Zusätzlich zur Abtastung des Komplettwerkzeugs 6 wird weiter dann - ggfls. unter Verwendung K(ünstlicher) I(ntelligenz) - ein erster Schneidenpunkt, ein Schneidenanfangspunkt, und ein zweiter Schneidenpunkt, ein Schneidenendpunkt, bei dem Werkzeug 6 bzw. dem Komplettwerkzeug 6 mittels der Kameravorrichtung 10 erkannt und vermessen.

Hierzu kann - wollte man dies nicht autonom durchführen - ein Bediener die Kameravorrichtung 10 in die beiden entsprechenden Höhen verfahren, welche er jeweils über eine Anzeige auf dem Monitor 38 kontrollieren kann, fokussiert dort den Schneidenanfangspunkt bzw. Schneidenendpunkt - und kann dann mittels der Tastatur 40 die jeweilige Vermessung auslösen. Ansonsten erfolgt dies autonom.

In dem digitalen Abbild wird dann unter Verwendung des vermessenen ersten und des vermessenen zweiten Schneidenpunktes bzw. unter Verwendung dieser ermittelten nächstliegenden Punkte im digitalen Abbild ein Schneidenbereich ermittelt ("kollisionsrelevanter digitaler Zwilling") und als solcher gekennzeichnet.

Auf Basis dieser Daten führt die Werkzeugmaschine und/oder ein externer Programmierplatz dann die Kollisionssimulation durch.

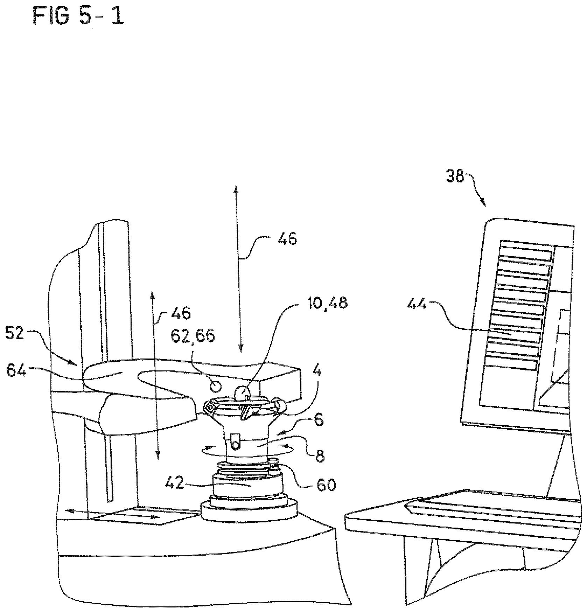

### (Messeinrichtungs-)Träger 64 mit Leseeinrichtung/-gerät 62 zum Auslesen eines Datenträgers 60 an der Werkzeugaufnahme 8 (FIG 5-1)

FIG 5-1 zeigt - als Teil des Schlittens 52 des Voreinstellgeräts 2 - einen (in etwa U-förmigen) Messeinrichtungsträger 64 bei dem Voreinstellgerät 2 mit einem dort integrierten Lesegerät/-einrichtung 62 zum Auslesen eines Datenträgers 60 an der Werkzeugaufnahme 8.

Das in der Spindel 42 gehaltene bzw. gespannte Komplettwerkzeug 6 - genauer die Werkzeugaufnahme 8 - sieht einen Datenträger 60, beispielsweise hier als ein berührungslos auslesbarer Datenträger, wie ein RFID-Chip, ausgebildet, vor, mittels welchem die Werkzeugaufnahme 8 vollautomatisch (auch im Rahmen vorgeschriebenen autonomen Abläufe) identifiziert und weitere Messdaten für diese erfasst werden können. Die Position des Datenträgers 60 an der Werkzeugaufnahme 8 ist in diesem Fall (HSK/SK-Werkzeugaufnahme) genormt.

Hierdurch werden falsche Zuordnungen oder fehlende Werkzeuge vermieden und ein maximaler Werkzeugeinsatz und eine hohe Maschinenverfügbarkeit gewährleistet. Dabei werden bzw. sind - mittels des Datenträgers 60 - alle werkzeugrelevanten Daten - hier berührungslos - auf dem Datenträger gespeichert, der mit der Werkzeugaufnahme 8 (beispielsweise wie in der DE 10 2016 102 692 A1 beschrieben) fest verbunden ist. Zusätzlich oder auch anstelle einzelner Werkzeugdaten kann auch ein das Werkzeug eindeutig identifizierender Code/Wert o.Ä. auf dem Chip gespeichert sein.

Wie FIG 5-1 auch zeigt, ist das Komplettwerkzeug 6 bzw. die Werkzeugaufnahme 8 auf der Spindel 42 angeordnet, welche - insbesondere auch von einem nicht näher dargestellten Aktuator automatisch um die Rotations-/Mittel- bzw. Längsachse 46 (z-Achse) drehbar ist.

Die erwähnte Kameravorrichtung 10 des Voreinstellgeräts 2 (vgl. FIG 1-1 Kamera 48 und Beleuchtungsmittel 50) ist auf dem U-förmigen Messeinrichtungsträger 64 angeordnet, welcher Teil des Schlittens 52 des Voreinstellgeräts 2 ist, - und welcher, wie in FIG 5-1 angedeutet, entlang zweier Achsen ("x" und "z" 46) manuell, wie insbesondere auch automatisch (vgl. autonomer Prozess - s. oben) verfahrbar ist.

Ferner ist in dem Messeinrichtungsträger 64, wie in FIG 5-1 angedeutet, ein Lesegerät 62 - mit einem (in Horizontalebene) verfahrbaren Lese-/Schreibkopf 66 - integriert, welches Daten aus dem Datenträger 60 an der Werkzeugaufnahme 8 auslesen kann.

Anschaulich ausgedrückt, der Lese-/Schreibkopf 66 des Lesegerätes 62 fährt aus dem Messeinrichtungsträger 64 heraus unmittelbar an den Datenträger heran (in dieser Position können die Daten aus dem Datenträger 60 ausgelesen werden) - und auch wieder zurück in den Messeinrichtungsträger.

Entweder autonom im Prozess integriert - oder als separater autonomer Prozess mittels eines Funktionsbuttons 44 am Touchscreen 38 (hier wird dann Berührung des Funktionsbuttons 44 der autonome Ausleseprozess gestartet) erfolgt das Auslesen von Daten aus dem Datenträger 60.

Der Messeinrichtungsträger 64 verfährt - entlang der Mittel-/z-Achse 46 - autonom in eine Grundposition, deren axiale Höhe der axialen Höhe entspricht, in welcher der Datenträger 60 an der Werkzeugaufnahme 8 befestigt ist.

Das Komplettwerkzeug 6 bzw. die Werkzeugaufnahme 8 wird - mittels der Spindel 42 - autonom solange um die z-Achse rotiert - bis der Datenchip 60, welcher in genormter Position an der Werkzeugaufnahme 8 angeordnet ist, vor dem Lesegerät 62 zu liegen kommt. Dabei ist der - Adapter abhängige - Winkelwert der Chipposition im System bekannt, kann aber gegebenenfalls Kamera unterstützt gesucht werden.

Ein Lese-/Schreibkopf 66 des Lesegeräts 62 verfährt bis unmittelbar an den Datenträger 60 heran - und liest dessen Daten aus. Danach verfährt der Lese-/Schreibkopf 66 wieder zurück.

Soll die Positionierung der Leseeinrichtung 62 vor dem Datenträger 60 (völlig) ohne Vorwissen (vgl. genormte Position) erfolgen, so kann vorgesehen sein, dass unter Verwendung K(ünstlicher)I(ntelligenz) basierter Bildverarbeitung die Kameraeinheit 10 den Datenträger 60 an der Werkzeugaufnahme 8 "sucht" und so dessen Position erkennt bzw. bestimmt. Höhenpositionierung des Messeinrichtungsträger 64 und Spindeldrehung sowie dann das Auslesen kann dann entsprechend erfolgen.

Ein derartiges Lesegerät 62 im Messeinrichtungsträger 64 eines Voreinstellgeräts 2 kann in entsprechender (auch funktionellen) Weise auch bei jeder anderen Werkzeugmaschine verwendet werden.

Auch könnte der Lese-/Schreibkopf 66 auch einfach eine spezielle Kamera sein, die am Messeinrichtungsträger 64 montiert ist, und die Werkzeugaufnahme 8 identifiziert - oder auch ein Lesegerät 62, welches eine Markierung, beispielsweise einen QR-Code, an der Werkzeugaufnahme 8 liest. Eine solche Markierung kann die Werkzeugaufnahme 8 dann identifizieren oder auch Werkzeugdaten codiert beinhalten.

Dieser hier im Zusammenhang mit FIG 5-1 beschriebene zusätzliche Aspekt bei einem Vorsteinstellgerät 2 ("(Messeinrichtungs-)Träger 52 mit Leseeinrichtung/-gerät 62 zum Auslesen eines Datenträgers 60 an der Werkzeugaufnahme 8 (FIG 5-1)") kann auch als separater Gegenstand einer Teilanmeldung - auch unabhängig vom Voreinstellgerät bzw. unabhängig in Bezug eines Voreinstellgerätes - weiterverfolgt werden.

Obwohl diese Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste (FIG 1):

- 2: Werkzeug
- 4: Werkzeughalter
- 6: Gesamtwerkzeug
- 8: (integrierte/verknüpfte) Bearbeitungsumgebung
- 10: (integrierte/verknüpfte) Fertigungsumgebung

- 12: Montagegerät, Schrumpfgerät
- 14: Wuchtgerät
- 16: Voreinstellgerät
- 18: (Bauteil-)Fertigungsprozess
- 20: Gesamtwerkzeugerstellungsprozess

- 22: Fertigungsplanung/-steuerung
- 24: Bearbeitungsdaten, Werkzeugliste, Einrichtungsblatt
- 26: Bearbeitungsmanagementsystem
- 28: Arbeitsanweisungen
- 30: Arbeitsdaten

- 32: Schnittstelle, OPC-UA Schnittstelle, Client/MQTT Schnittstelle
- 36: Werkzeugverwaltung und Kommissionierung
- 38: CAD-/CAM-System
- 40: (eineindeutiger) Kennzeichnung/Code, (eineindeutiger) Data-Matrix-Code

- 42: Werkzeugmaschine/CNC Fräsmaschine
- 44: Datenbank
- 46: Auswerteeinheit

### Bezugszeichenliste DE 10 2024 122 026.0 (FIG 1-1 bis FIG 5-1) :

- 2: Vorrichtung zum Vermessen eines Werkzeugs oder eines Komplettwerkzeugs, Voreinstellgerät
- 4: (rotierendes/nicht rotierendes) Werkzeug, Fräswerkzeug, Schleifscheibe, Bohrwerkzeug/Bohrer
- 6: Komplettwerkzeug
- 8: Werkzeugaufnahme, (Hydrodehn-)Spannfutter
- 10: Vermessungseinheit, (optische) Messeinrichtung, Kameraeinheit

- 12: (oberster/höchster) Punkt
- 14: Spitze, Bohrspitze
- 16: Funktionsgeometrie
- 18: radial äußere Kante, Schneidkante, Schleifscheibenkante
- 20: radial äußeren Rand

- 22: Kontur
- 24: Summenbild
- 26: Summengeometrie, maximale Außenkontur
- 28: Minimalkontur, minimale Innenkontur

- 32: Bedien- und Anzeigenoberfläche
- 34: Rechen- und Steuereinheit
- 36: Schnittstelle mit der Werkzeugmaschine
- 38: Anzeigemittel, Monitor, Touchscreen
- 40: Eingabemittel, Tastatur

- 42: Spindel
- 44: Funktionsbutton
- 46: Mittel-/Längs-/Rotationsachse, z-Achse
- 48: Kamera
- 50: Beleuchtungsmittel

- 52: Schlitten
- 54: Drucker
- 56: am weitesten außenliegende Schneide 16
- 58: am weitesten innenliegende Schneide 16

- 60: Datenträger, RFID Chip
- 62: Leseeinrichtung/-gerät (für 60)
- 64: Messeinrichtungsträger (als Teil des Schlittens 52)
- 66: Lese-/Schreibkopf (von 62)

## Patentansprüche

1. **Verfahren** zu einem Datenaustausch bei einer Steuerung einer Bearbeitung eines Gesamtwerkzeugs aus einem Werkzeughalter und einem Werkzeug in einer integrierten/verknüpften Bearbeitungsumgebung mit zumindest einem Gerät zu einem Montieren des Werkzeugs in den Werkzeughalter, insbesondere einem Schrumpfgerät, und/oder einem Wuchtgerät und/oder einem Voreinstellgerät, insbesondere im Rahmen eines, insbesondere automatisierten und/oder digitalisierten, Fertigungsprozesses für die Fertigung eines Bauteils unter Verwendung eines Gesamtwerkzeugs mit gegebenenfalls weiteren Maschinen und Automatisierungskomponenten einer integrierten Fertigungsumgebung,
**bei dem**
- , insbesondere eine übergeordnete Fertigungsplanung/- steuerung zur Fertigung eines Bauteils, Bearbeitungsdaten zur Bearbeitung des Gesamtwerkzeugs, insbesondere eine Werkzeugliste und/oder Einrichtungsblätter, an ein Bearbeitungsmanagementsystem übermittelt und
- das Bearbeitungsmanagementsystem unter Verwendung der Bearbeitungsdaten ermittelte Arbeitsanweisungen/-daten an die Geräte der integrierten/verknüpften Bearbeitungsumgebung übermittelt.

2. **Verfahren** nach mindestens einem der voranstehenden Ansprüche,
**dadurch gekennzeichnet, dass**
unter Verwendung der Arbeitsanweisungen/-daten die Geräte der integrierten/verknüpften Bearbeitungsumgebung, insbesondere ferngesteuert durch das Bearbeitungsmanagementsystem, überwacht und/oder gesteuert werden.

3. **Verfahren** nach mindestens einem der voranstehenden Ansprüche,
**dadurch gekennzeichnet, dass**
die Arbeitsdaten, insbesondere die für das Montagegerät, insbesondere das Schrumpfgerät, zumindest eine der folgenden Informationen, insbesondere mehrere der folgenden Informationen, insbesondere alle der folgenden Informationen, beinhalten:
- Typ des Werkzeughalters, insbesondere des Schrumpffutters, (gegebenenfalls auch Artikelnummer) und/oder Lagerplatz des Werkzeughalters, insbesondere des Schrumpffutters,
- eindeutige Kennzeichnung, insbesondere Nummer, des Werkzeughalters, insbesondere des Schrumpffutters,
- Typ des Werkzeugs, insbesondere des Fräsers, und/oder Lagerplatz des Werkzeugs, insbesondere des Fräsers,
- eindeutige Kennzeichnung, insbesondere Nummer, des Werkzeugs, insbesondere des Fräsers, insbesondere im Fall, dass das bereits benutzte Werkzeug, insbesondere der Fräser, noch genügend Restlaufzeit hat, und/oder des Werkzeughalters, insbesondere des Schrumpffutter,
- Anzahl von benötigten gleichen Werkzeugen, insbesondere abhängig von einer geplanten Stückzahl eines zu fertigenden Bauteiles und einer Standzeit des Werkzeugs, insbesondere des Fräsers, insbesondere auch unter Berücksichtigung einer Restlaufzeit bei gebrauchten Werkzeugen, insbesondere Fräsern,
- Soll-Länge des Gesamtwerkzeuges mit Toleranzen,
- Vorhaltemaß (gegebenenfalls noch anzupassen),
- Anzahl von Montagezyklen, insbesondere Schrumpfzyklen, des Werkzeughalters, insbesondere des Schrumpffutters.

4. **Verfahren** nach mindestens einem der voranstehenden Ansprüche,
**dadurch gekennzeichnet, dass**
die Arbeitsanweisungen, insbesondere die für das Montagegerät, insbesondere das Schrumpfgerät, zumindest eine der folgenden Informationen, insbesondere mehrere der folgenden Informationen, insbesondere alle der folgenden Informationen, beinhalten:
- Werkzeughalter, insbesondere Schrumpffutter, und/oder Werkzeug, insbesondere Fräser, in einer vorgegebenen Stückzahl aus Lager entnehmen,
- Lesen, insbesondere Scannen, einer eindeutigen Kennzeichnung, insbesondere Data-Matrix-Code und/oder Nummer, am/des Werkzeughalters, insbesondere Schrumpffutters, und/oder am/des Werkzeugs, insbesondere des Fräsers,
- , insbesondere automatische, Auswahl von Schrumpfparameter, insbesondere mit einem Vorhaltemaß,
- Anzeigen von bzw. aller relevanten Schrumpfparameter/- daten,
- Längenanschlag auf eine vorgegebene oder vorgebbare Länge fahren, evtl. automatisch oder manuell mit Benutzerführung am Montagegerät, insbesondere am Schrumpfgerät,
- Anzeige Grobeinstellung, insbesondere mit Farbanzeige, insbesondere rot / grün,
- bei Annäherung an das Sollmaß Feinanzeige, insbesondere mit Farbanzeige, insbesondere mit rot / grün,
- Werkzeughalter, insbesondere Schrumpffutter, erwärmen,
- Werkzeug, insbesondere Fräser, einsetzen,
- Längenanschlag einschwenken,
- Werkzeug, insbesondere Fräser, anheben an Längenanschlag (manuell oder mit Druckfeder),
- Wartezeit, bis Werkzeug, insbesondere Fräser, geklemmt wird,
- Werkzeughalter, insbesondere Schrumpffutter, kühlen,
- Überwachung des Kühlvorganges,
- Ist-Länge kontrollieren mit Längenanschlag,
- Abspeichern der Ist-Länge in Datenbank,
- Kennzeichnung des Gesamtwerkzeugs mit der eindeutigen Nummer des Werkzeughalters, insbesondere des Schrumpffutters.
- , insbesondere als Alternative zum Schrumpfen für mechanische Spannfutter eine automatische, Anzeige von Werkzeughalterparameter, insbesondere zu verwendendes Drehmoment für das insbesondere Spannzangenfutter oder Hydrodehnspannfutter zur fachgerechten Montage sowie dem dazugehörigen Zubehör für Wendeplattenhalter wie Nutensteine, Montagevorrichtungen und dergleichen, sowie abschließende Darstellung des Komplettwerkzeuges zur Bestätigung der fachgerechten Montage, insbesondere samt deren Längentoleranzen.

5. **Verfahren** nach mindestens einem der voranstehenden Ansprüche,
**dadurch gekennzeichnet, dass**
die Arbeitsdaten, insbesondere die für das Voreinstellgerät, zumindest eine der folgenden Informationen, insbesondere mehrere der folgenden Informationen, insbesondere alle der folgenden Informationen, beinhalten:
- eine Geometrieinformation, insbesondere eine Gesamtlänge des Gesamtwerkzeugs und/oder einen Durchmesser des Werkzeugs, insbesondere des Fräsers, und/oder Eckenradius des Werkzeugs, insbesondere des Fräsers,
- eine Werkzeugstandzeit, insbesondere in Form von Bauteilen pro Neuwerkzeug oder Standzeit in Minuten / Stunden.

6. **Verfahren** nach mindestens einem der voranstehenden Ansprüche,
**dadurch gekennzeichnet, dass**
die Arbeitsanweisungen, insbesondere die für das Voreinstellgerät, zumindest eine der folgenden Informationen, insbesondere mehrere der folgenden Informationen, insbesondere alle der folgenden Informationen, beinhalten:
- Gesamtwerkzeug in Messspindel einsetzen,
- ggf. Start eines automatischen Messlaufes - oder Start einer manuellen Vermessung, insbesondere von vorgegebenen Größen,
- Einlesen von Ist-Maße in Datenbank und/oder Ist-Maße senden an Bearbeitungsmanagementsystem (bzw. deren Datenbank),
- zusätzlich - senden von Voreinstelldaten auch an Bearbeitungsmaschinen.

7. **Verfahren** nach mindestens einem der voranstehenden Ansprüche,
**dadurch gekennzeichnet, dass**
die Arbeitsdaten, insbesondere die für das Wuchtgerät, zumindest eine der folgenden Informationen, insbesondere mehrere der folgenden Informationen, insbesondere alle der folgenden Informationen, beinhalten:
- Wuchttoleranz aus Datenbank,
- weitere Parameter wie Gesamtlänge und Gesamtgewicht aus Datenbank
- Messmethode (z. B. einfach / Umschlag bzw. (automatisches) Umschlagwuchten / einfach mit Spindelkorrektur),
- Auswuchtmethode (z. B. Unwuchtausgleich durch Materialabnahme oder Materialzusatz oder durch Verstellen von Massen) sowie insbesondere entsprechende Wuchtebenen (Höhe, Durchmesser, ...), wo Masse hinzugefügt oder abgetragen werden muss.

8. **Verfahren** nach mindestens einem der voranstehenden Ansprüche,
**dadurch gekennzeichnet, dass**
die Arbeitsanweisungen, insbesondere die für das Wuchtgerät, zumindest eine der folgenden Informationen, insbesondere mehrere der folgenden Informationen, insbesondere alle der folgenden Informationen, beinhalten:
- Gesamtwerkzeug in Wuchtspindel einspannen,
- Messlauf nach vorgegebener Messmethode (z. B. einfach / Umschlag / einfach mit Spindelkorrektur),
- Unwuchtausgleich nach vorgegebener Methode,
- Überprüfen der Wuchtgenauigkeit (Prüflauf), Ist-Unwucht einlesen in Datenbank,
- Ergebnis senden an Bearbeitungsmanagementsystem (bzw. deren Datenbank),
- gegebenenfalls Vorgang wiederholen, bis Ergebnis in Ordnung (im Bearbeitungsmanagementsystem ist somit der Verlauf des Wuchtens nachvollziehbar).

9. **Verfahren** nach mindestens einem der voranstehenden Ansprüche,
**dadurch gekennzeichnet, dass**
das **Bearbeitungsmanagementsystem**
- einen Status, insbesondere einen Online Status, zumindest eines Geräts, insbesondere sämtlicher Geräte, überwacht und/oder
- Prozesse zumindest eines Geräts, insbesondere sämtlicher Geräte, dokumentiert, insbesondere auch Eingriffe, insbesondere manuelle Eingriffe, in Prozesse dokumentiert
- und/oder eine Einhaltung von vorgegebenen bzw. vorgebbaren Toleranzen bei den Prozessen von zumindest einem Gerät, insbesondere von sämtlichen Geräte, überwacht und/oder
- Veränderungen, insbesondere von einem Gerätestatus, von Arbeitsanweisungen/-Daten, Werten, Toleranzen und/oder sonstigen Informationen überwacht und/oder dokumentiert und/oder
- Prozesswiederholungen zählt und/oder dokumentiert, insbesondere unter Bezugnahme auf die eindeutige Kennzeichnung des Werkzeughalters und/oder des Werkzeugs und/oder
- Arbeitsanweisungen/-daten aktualisiert und/oder
- Arbeitsanweisungen/-daten im Falle unerwünschter Zustände, insbesondere Fehlerzustände und/oder fehlerhafter bzw. fehlerhaft durchgeführter Prozesse, erzeugt und/oder
- aus den Arbeitsanweisungen eine Jobliste generiert und insbesondere die Jobliste den Geräten der Bearbeitungsumgebung zur Verfügung stellt bzw. übermittelt (dieses kann vom Bearbeitungsmanagementsystem vorab an eine Maschine (als "Job") gesendet werden, oder zum Zeitpunkt der Durchführung von der Maschine beim Bearbeitungsmanagementsystem angefordert werden) und/oder
- Bearbeitungsprozesse, insbesondere solche die auf den Geräten der Bearbeitungsumgebung, insbesondere bei der Erstellung des Gesamtwerkzeugs, durchgeführt werden, zählt und dokumentiert und/oder
- bidirektional in der bzw. mit der Bearbeitungsumgebung bzw. mit den Geräten der Bearbeitungsumgebung kommuniziert und/oder
- einen Status von in die Umgebungen integrierter Geräte (live) "trackt" (Status: Online/Offline; Status: Rückmeldung des Jobs (Gut/Schlecht)),
- den/die zuletzt durchgeführten Jobs von einer eineindeutigen Kennzeichnung überprüft (Letztes Ergebnis des durchgeführten Jobs wird an der eineindeutigen Kennzeichnung angezeigt - somit kann man sicherstellen, dass alle notwendigen Schritte auch durchgeführt worden sind.),
- lückenlos die Historie der durchgeführten Arbeiten an den Maschinen aufzeichnet und die durchgeführten Arbeiten an den Maschinen dokumentiert.

10. **Verfahren** nach mindestens einem der voranstehenden Ansprüche,
**dadurch gekennzeichnet, dass**
die Arbeitsanweisungen/-daten über eine OPC-UA Schnittstelle, und/oder eine Client Schnittstelle oder eine MQTT Schnittstelle übermittelt werden.

11. **Verfahren** nach mindestens einem der voranstehenden Ansprüche,
**dadurch gekennzeichnet, dass**
das **Verfahren** computerimplementiert ist.

12. **Verfahren** nach mindestens einem der voranstehenden Ansprüche,
**dadurch gekennzeichnet, dass**
Daten, insbesondere die Arbeitsanweisungen/-daten und/oder Daten, die von den Geräten generiert werden, ausgewertet werden, insbesondere durch das Bearbeitungsmanagementsystem.

13. **Bearbeitungsmanagementsystem** für einen Datenaustausch bei einer Steuerung einer Bearbeitung eines Gesamtwerkzeugs aus einem Werkzeughalter und einem Werkzeug in einer integrierten/verknüpften Bearbeitungsumgebung mit zumindest einem Gerät zu einem Montieren des Werkzeugs in den Werkzeughalter, insbesondere einem Schrumpfgerät, und/oder einem Wuchtgerät und/oder einem Voreinstellgerät, insbesondere im Rahmen eines, insbesondere automatisierten und/oder digitalisierten, Fertigungsprozesses für die Fertigung eines Bauteils unter Verwendung eines Gesamtwerkzeugs mit gegebenenfalls weiteren Maschinen und Automatisierungskomponenten einer integrierten Fertigungsumgebung,
**eingerichtet derart, dass**
unter Verwendung von, insbesondere von einer übergeordneten Fertigungsplanung/-steuerung zur Fertigung eines Bauteils übermittelte, Bearbeitungsdaten zur Bearbeitung des Gesamtwerkzeugs, insbesondere eine Werkzeugliste und/oder Einrichtungsblätter, Arbeitsanweisungen/-daten ermittelbar und
diese Arbeitsanweisungen/-daten an die Geräte der integrierten/verknüpften Bearbeitungsumgebung übermittelbar sind.

14. **Bearbeitungsmanagementsystem** nach mindestens einem der voranstehenden **Bearbeitungsmanagementsystemansprüche, dadurch gekennzeichnet, dass**
die Arbeitsdaten, insbesondere die für das Montagegerät, insbesondere das Schrumpfgerät, zumindest eine der folgenden Informationen, insbesondere mehrere der folgenden Informationen, insbesondere alle der folgenden Informationen, beinhalten:
- Typ des Werkzeughalters, insbesondere des Schrumpffutters, (gegebenenfalls auch Artikelnummer) und/oder Lagerplatz des Werkzeughalters, insbesondere des Schrumpffutters,
- eindeutige Kennzeichnung, insbesondere Nummer, des Werkzeughalters, insbesondere des Schrumpffutters,
- Typ des Werkzeugs, insbesondere des Fräsers, und/oder Lagerplatz des Werkzeugs, insbesondere des Fräsers,
- eindeutige Kennzeichnung, insbesondere Nummer, des Werkzeugs, insbesondere des Fräsers, insbesondere im Fall, dass das bereits benutzte Werkzeug, insbesondere der Fräser, noch genügend Restlaufzeit hat, und/oder des Werkzeughalters, insbesondere des Schrumpffutter,
- Anzahl von benötigten gleichen Werkzeugen, insbesondere abhängig von einer geplanten Stückzahl eines zu fertigenden Bauteiles und einer Standzeit des Werkzeugs, insbesondere des Fräsers, insbesondere auch unter Berücksichtigung einer Restlaufzeit bei gebrauchten Werkzeugen, insbesondere Fräsern,
- Soll-Länge des Gesamtwerkzeuges mit Toleranzen,
- Vorhaltemaß (gegebenenfalls noch anzupassen),
- Anzahl von Montagezyklen, insbesondere Schrumpfzyklen, des Werkzeughalters, insbesondere des Schrumpffutters.

15. **Bearbeitungsmanagementsystem** nach mindestens einem der voranstehenden **Bearbeitungsmanagementsystem**ansprüche, **dadurch gekennzeichnet, dass**
die Arbeitsanweisungen, insbesondere die für das Montagegerät, insbesondere das Schrumpfgerät, zumindest eine der folgenden Informationen, insbesondere mehrere der folgenden Informationen, insbesondere alle der folgenden Informationen, beinhalten:
- Werkzeughalter, insbesondere Schrumpffutter, und/oder Werkzeug, insbesondere Fräser, in einer vorgegebenen Stückzahl aus Lager entnehmen,
- Lesen, insbesondere Scannen, einer eindeutigen Kennzeichnung, insbesondere Data-Matrix-Code und/oder Nummer, am/des Werkzeughalters, insbesondere Schrumpffutters, und/oder am/des Werkzeugs, insbesondere des Fräsers,
- , insbesondere automatische, Auswahl von Schrumpfparameter, insbesondere mit einem Vorhaltemaß,
- Anzeigen von bzw. aller relevanten Schrumpfparameter/- daten,
- Längenanschlag auf eine vorgegebene oder vorgebbare Länge fahren, evtl. automatisch oder manuell mit Benutzerführung am Montagegerät, insbesondere am Schrumpfgerät,
- Anzeige Grobeinstellung, insbesondere mit Farbanzeige, insbesondere rot / grün,
- bei Annäherung an das Sollmaß Feinanzeige, insbesondere mit Farbanzeige, insbesondere mit rot / grün,
- Werkzeughalter, insbesondere Schrumpffutter, erwärmen,
- Werkzeug, insbesondere Fräser, einsetzen,
- Längenanschlag einschwenken,
- Werkzeug, insbesondere Fräser, anheben an Längenanschlag (manuell oder mit Druckfeder),
- Wartezeit, bis Werkzeug, insbesondere Fräser, geklemmt wird,
- Werkzeughalter, insbesondere Schrumpffutter, kühlen,
- Überwachung des Kühlvorganges,
- Ist-Länge kontrollieren mit Längenanschlag,
- Abspeichern der Ist-Länge in Datenbank,
- Kennzeichnung des Gesamtwerkzeugs mit der eindeutigen Nummer des Werkzeughalters, insbesondere des Schrumpffutters.
- , insbesondere als Alternative zum Schrumpfen für mechanische Spannfutter eine automatische, Anzeige von Werkzeughalterparameter, insbesondere zu verwendendes Drehmoment für das insbesondere Spannzangenfutter oder Hydrodehnspannfutter zur fachgerechten Montage sowie dem dazugehörigen Zubehör für Wendeplattenhalter wie Nutensteine, Montagevorrichtungen und dergleichen, sowie abschließende Darstellung des Komplettwerkzeuges zur Bestätigung der fachgerechten Montage, insbesondere samt deren Längentoleranzen.

16. **Bearbeitungsmanagementsystem** nach mindestens einem der voranstehenden **Bearbeitungsmanagementsystem**ansprüche, **dadurch gekennzeichnet, dass**
die Arbeitsdaten, insbesondere die für das Voreinstellgerät, zumindest eine der folgenden Informationen, insbesondere mehrere der folgenden Informationen, insbesondere alle der folgenden Informationen, beinhalten:
- eine Geometrieinformation, insbesondere eine Gesamtlänge des Gesamtwerkzeugs und/oder einen Durchmesser des Werkzeugs, insbesondere des Fräsers, und/oder Eckenradius des Werkzeugs, insbesondere des Fräsers,
- eine Werkzeugstandzeit, insbesondere in Form von Bauteilen pro Neuwerkzeug oder Standzeit in Minuten / Stunden.

17. **Bearbeitungsmanagementsystem** nach mindestens einem der voranstehenden **Bearbeitungsmanagementsystem**ansprüche, **dadurch gekennzeichnet, dass**
die Arbeitsanweisungen, insbesondere die für das Voreinstellgerät, zumindest eine der folgenden Informationen, insbesondere mehrere der folgenden Informationen, insbesondere alle der folgenden Informationen, beinhalten:
- Gesamtwerkzeug in Messspindel einsetzen,
- ggf. Start eines automatischen Messlaufes - oder Start einer manuellen Vermessung, insbesondere von vorgegebenen Größen,
- Einlesen von Ist-Maße in Datenbank und/oder Ist-Maße senden an Bearbeitungsmanagementsystem (bzw. deren Datenbank),
- zusätzlich - senden von Voreinstelldaten auch an Bearbeitungsmaschinen.

18. **Bearbeitungsmanagementsystem** nach mindestens einem der voranstehenden **Bearbeitungsmanagementsystem**ansprüche, **dadurch gekennzeichnet, dass**
die Arbeitsdaten, insbesondere die für das Wuchtgerät, zumindest eine der folgenden Informationen, insbesondere mehrere der folgenden Informationen, insbesondere alle der folgenden Informationen, beinhalten:
- Wuchttoleranz aus Datenbank,
- weitere Parameter wie Gesamtlänge und Gesamtgewicht aus Datenbank
- Messmethode (z. B. einfach / Umschlag bzw. (automatisches) Umschlagwuchten / einfach mit Spindelkorrektur),
- Auswuchtmethode (z. B. Unwuchtausgleich durch Materialabnahme oder Materialzusatz oder durch Verstellen von Massen) sowie insbesondere entsprechende Wuchtebenen (Höhe, Durchmesser, ...), wo Masse hinzugefügt oder abgetragen werden muss.

19. **Bearbeitungsmanagementsystem** nach mindestens einem der voranstehenden **Bearbeitungsmanagementsystem**ansprüche, **dadurch gekennzeichnet, dass**
die Arbeitsanweisungen, insbesondere die für das Wuchtgerät, zumindest eine der folgenden Informationen, insbesondere mehrere der folgenden Informationen, insbesondere alle der folgenden Informationen, beinhalten:
- Gesamtwerkzeug in Wuchtspindel einspannen,
- Messlauf nach vorgegebener Messmethode (z. B. einfach / Umschlag / einfach mit Spindelkorrektur),
- Unwuchtausgleich nach vorgegebener Methode,
- Überprüfen der Wuchtgenauigkeit (Prüflauf), Ist-Unwucht einlesen in Datenbank,
- Ergebnis senden an Bearbeitungsmanagementsystem (bzw. deren Datenbank),
- gegebenenfalls Vorgang wiederholen, bis Ergebnis in Ordnung (im Bearbeitungsmanagementsystem ist somit der Verlauf des Wuchtens nachvollziehbar).

20. **Bearbeitungsmanagementsystem** nach mindestens einem der voranstehenden **Bearbeitungsmanagementsystem**ansprüche, **dadurch gekennzeichnet, dass**
das **Bearbeitungsmanagementsystem** derart eingerichtet ist, dass
- ein Status, insbesondere einen Online Status, zumindest eines Geräts, insbesondere sämtlicher Geräte, überwachbar ist und/oder
- Prozesse zumindest eines Geräts, insbesondere sämtlicher Geräte, dokumentierbar, insbesondere auch Eingriffe, insbesondere manuelle Eingriffe, in Prozesse dokumentierbar, sind
- und/oder eine Einhaltung von vorgegebenen bzw. vorgebbaren Toleranzen bei den Prozessen von zumindest einem Gerät, insbesondere von sämtlichen Geräte, überwachbar sind und/oder
- Veränderungen, insbesondere von einem Gerätestatus, von Arbeitsanweisungen/-Daten, Werten, Toleranzen und/oder sonstigen Informationen überwachbar und/oder dokumentierbar sind und/oder
- Prozesswiederholungen zählbar und/oder dokumentierbar sind, insbesondere unter Bezugnahme auf die eindeutige Kennzeichnung des Werkzeughalters und/oder des Werkzeugs, und/oder
- Arbeitsanweisungen/-daten aktualisierbar sind und/oder
- Arbeitsanweisungen/-daten im Falle unerwünschter Zustände, insbesondere Fehlerzustände und/oder fehlerhafter bzw. fehlerhaft durchgeführter Prozesse, erzeugbar sind und/oder
- aus den Arbeitsanweisungen eine Jobliste generierbar und insbesondere die Jobliste den Geräten der Bearbeitungsumgebung zur Verfügung stellbar bzw. übermittelbar sind (dieses kann vom Bearbeitungsmanagementsystem vorab an eine Maschine (als "Job") gesendet werden, oder zum Zeitpunkt der Durchführung von der Maschine beim Bearbeitungsmanagementsystem angefordert werden) und/oder
- Bearbeitungsprozesse, insbesondere solche die auf den Geräten der Bearbeitungsumgebung, insbesondere bei der Erstellung des Gesamtwerkzeugs, durchführbar, zählbr und dokumentierbar sind und/oder
- bidirektional in der bzw. mit der Bearbeitungsumgebung bzw. mit den Geräten der Bearbeitungsumgebung kommunizierbar ist, und/oder
- ein Status von in die Umgebungen integrierter Geräte (live) "trackbar" ist (Status: Online/Offline; Status:
Rückmeldung des Jobs (Gut/Schlecht)),
- den/die zuletzt durchgeführten Jobs von einer eineindeutigen Kennzeichnung überprüfbar sind (Letztes Ergebnis des durchgeführten Jobs wird an der eineindeutigen Kennzeichnung angezeigt - somit kann man sicherstellen, dass alle notwendigen Schritte auch durchgeführt worden sind.),
- lückenlos die Historie der durchgeführten Arbeiten an den Maschinen aufzeichnbar und die durchgeführten Arbeiten an den Maschinen dokumentierbar sind.

21. **Bearbeitungsmanagementsystem** nach mindestens einem der voranstehenden **Bearbeitungsmanagementsystem**ansprüche, **dadurch gekennzeichnet, dass**
es eingerichtet ist, um Daten, insbesondere die Arbeitsanweisungen/-daten und/oder Daten, die von den Geräten generiert werden, auszuwerten.

22. **Vorrichtung/System zur Datenverarbeitung,** umfassend Mittel zur Ausführung [der Schritte] des Verfahrens nach Anspruch 1.

23. **Computerprogramm[produkt]**, umfassend Befehle, die bei der Ausführung des Programms durch einen Computer diesen veranlassen, das Verfahren/die Schritte des Verfahrens nach Anspruch 1 auszuführen.

24. **Computerlesbares (Speicher)medium,** umfassend Befehle, die bei der Ausführung durch einen Computer diesen veranlassen, das Verfahren/die Schritte des Verfahrens nach Anspruch 1 auszuführen.
